# EUROPEAN PATENT SPECIFICATION

(11) **EP 3 170 073 B1**
(45) Date of publication and mention of the grant of the patent: **28.10.2020**
(21) Application number: 15744794.7
(22) Date of filing: 13.07.2015
(51) Int. Cl.: G06F 9/455

(54) **VARIABLE HANDLES**
VARIABLE GRIFFE
TRAITEMENTS D'EXCEPTION VARIABLES

(30) Priority: 14.07.2014 US 201462024334 P; 07.04.2015 US 201514681003; 07.04.2015 US 201514681017
(43) Date of publication of application: 24.05.2017
(73) Proprietor: Oracle International Corporation, Redwood Shores, CA 94065 (US)
(72) Inventor: SANDOZ, Paul, Redwood Shores, California 94065 (US); GOETZ, Brian, Williston, VT 05495 (US); ROSE, John Robert, Redwood Shores, California 95065 (US)
(74) Representative: Dendorfer, Claus
(86) International application number: PCT/US2015/040209
(87) International publication number: WO 2016/010923

(56) References cited:
- KONSTANTIN POPOV: "A Parallel Abstract Machine for the Thread-Based Concurrent Constraint Language Oz", INTERNET CITATION, September 1997 (1997-09), XP002312558, Retrieved from the Internet: URL:http://www.coli.uni-sb.de/sfb378/1999- 2001/publications/pamoz-en.html [retrieved on 1997-09-01]

## Description

### TECHNICAL FIELD

Embodiments relate generally to techniques for supporting and/or utilizing improved memory access within programming languages.

### BACKGROUND

In multiprocessor systems, processors often have one or more layers of memory cache, which improve performance both by speeding access to data and reducing traffic on the shared memory bus. However, while memory caches can greatly improve performance, they also present new challenges. For example, two processors that examine the same memory location may receive different results since one processor may use a stale cached value, whereas the other may pull an updated value from main memory. Furthermore, many compilers and computer architectures rewrite code to optimize the execution. For example, a processor may rewrite or reorder code to take advantage of the current data stored in its cache. However, many of the optimizations only ensure consistent program semantics for the case where a single processor/thread is executing the program. As a result, in a multiprocessor/multithreaded environment, the reordering could result in unexpected behavior and inconsistent program states. For example, the computer architecture might perform a load/store early when it is most convenient to do so provided that the variable is not relied upon until the original program index of the instruction. However, with multiple threads or processors, performing operations early that are relied upon by other threads could result in a state that would otherwise be impossible to encounter.

The article "A parallel abstract machine for the thread-based concurrent language Oz" by Konstantin Popov, retrieved from the Internet at http://www.coli-uni-sb.de/sfb378/ 1999-2001/publications/pamoz-en.html, XP002312558, discloses a thread-based concurrent constraint programming language with state that is intended for modeling multi-agent systems, as well as for solving combinatoric problems. Three different types of data objects are defined; the first are store objects which represent primitive or compound types, the second are reference objects which store references to other objects, and third are variable objects which represent variables for which the value is yet unknown. Runnable threads are stored in a shared pool and workers pull threads from the pool, execute them for a time, pause execution of the thread, store the thread back into the pool, and then select another thread to execute. One of the triggers that causes execution to be stalled is when operations are performed on a variable object since the value of that object is unknown and cannot be manipulated or dereferenced until it is bound. When one of the threads discovers the value of a variable object, the variable object is replaced with a reference object that points to a store object holding the value.

### SUMMARY

The invention is defined by the independent claims, taking due account of any element which is equivalent to an element specified in the claims. The dependent claims concern optional features of some embodiments of the invention.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1 is a logical block diagram illustrating an example computing architecture in which certain techniques described herein may be implemented, according to various embodiments.
FIG. 2 is a block diagram illustrating an example class file according to an embodiment.
FIG. 3 is a block diagram illustrating example structures for a virtual machine run-time environment according to an embodiment.
FIG. 4 is a block diagram illustrating an example structure for a frame on a virtual machine stack according to an embodiment.
FIG. 5 illustrates an example process for executing an atomic operation using a VarHandle in block diagram form according to an embodiment.
FIG. 6 is a block diagram illustrating one embodiment of a computer system suitable for implementing methods and features described herein.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

Embodiments are described herein according to the following outline:
1.0 General Overview
   1.1 Fenced Operations
   1.2 Atomic Operations
   1.3 Exposing Constrained Operations
2.0 Example Operating Architecture
   2.1 Example Class File Structure
   2.2 Example Virtual Machine Architecture
   2.3 Loading, Linking, and Initializing
3.0 VarHandles
   3.1 Example Constrained Operations
   3.2 Example Interface
   3.3 VarHandle Process Flow Field Example
   3.4 VarHandle Process Flow Array Example
   3.5 Optimizations
   3.6 Relaxing The Return Type On Polymorphic Signature Methods
   3.7 Generic Polymorphic Signatures
   3.8 Consolidation of Code between VarHandles and MethodHandles
   3.9 Memory Fences
   3.10 Extensions of VarHandle Functionality
4.0 Hardware Overview
5.0 Extensions and Alternatives
6.0 Additional Disclosure
7.0 Second Additional Disclosure

### 1.0. GENERAL OVERVIEW

Techniques are described herein for providing secure and efficient constrained access to memory locations through the use of "handles" that support a variety of different memory access modes.

### 1.1 FENCED OPERATIONS

Memory models define the conditions for knowing when writes to memory by other processors are visible to the current processor, and writes by the current processor are visible to other processors. For example, some processors exhibit a strong memory model where all processors see exactly the same value for any given memory location. Others exhibit a weaker memory model, where special instructions referred to as memory "barriers" or "fences" flush or invalidate the local processor cache in order to see writes made by other processors or make writes by a processor visible to others.

The effect of the aforementioned memory barriers is that the memory effects of operations before the fence are made visible before operations after the fence. Thus, the fence can be thought of as preventing operations from being reordered across the fence. In some cases, computing architectures provide support for general fences that prevent the reordering of any load/store operation before the fence with another load/store operation past the fence. However, others provide support for fine-grained fences which prevent the reordering of certain types of operations, such as a load-load fence preventing the reordering of load instructions before the fence with other load instructions after the fence, a load-store fence preventing the reordering of load operations before the fence with store operations after the fence, and so forth. The fine-grained fences typically require less overhead than general fences, thus allowing developers to optimize the execution of their program by using the least expensive fence which provides the required functionality. Certain types of memory access operations utilize fences in order to improve program consistency and avoid race conditions. These operations will henceforth be referred to as "fenced operations" or "fenced access", which include techniques such as relaxed access, volatile access, lazy access, and so forth.

### 1.2 ATOMIC OPERATIONS

Atomic operations may also be used to ensure program consistency. Atomic operations are operations that are performed as though a single unit of access. For example, the get-and-set atomic operation replaces the current value of a variable and "simultaneously" returns the old value of the variable. In some instances, atomic operations are implemented via spinlocks and memory fences. However, many computer architectures support native atomic operations that can be performed efficiently by the underlying hardware, rather than requiring implementation via spinlocks and memory fences at the software level. For example, a processor may be configured to read the memory location and write to the memory location in the same bus operations, thus preventing other processors from accessing that memory location in the middle of the atomic operation. As used herein, "constrained" operations/functions may refer to either or both of "fenced" operations/functions and "atomic" operations/functions, since both "fenced" and "atomic" operations/functions apply constraints on how the memory locations representing the variables are accessed and/or manipulated.

### 1.3 EXPOSING CONSTRAINED OPERATIONS

In some cases, how to expose an interface to such constrained operations in an efficient and convenient manner can be a significant challenge. For example, constrained operations may be performed via access to an "unsafe" library that interacts with arbitrary memory locations. However, for many language and virtual machine developers, allowing coders access to arbitrary memory addresses can undermine safety guarantees that the platform would otherwise like to make, resulting in unexpected behavior, such as segmentation faults or worse, that the language/virtual machine is designed to minimize or outright prevent from occurring. For example, the "unsafe" library may be a native library that is optimized for a particular processor type, but may not check "higher level" semantics, such as ensuring that a write to an array location is within bounds. As a result of the complexities that arise when using the "unsafe" library, language and virtual machine developers often place the responsibility of preventing or minimizing the possibility of unexpected behavior in the hands of coders.

Another potential solution is to restrict access to the "unsafe" library to trusted developers who are known to have the expertise to use the "unsafe" library in a safe and responsible manner. However, limiting access to the constrained operations to a small sub-set of developers hinders the ability for other developers to create robust and efficient software products.

### 1.4 VARHANDLES

In an embodiment, a VarHandle (short for "variable handle") is an executable reference to memory, such as memory defined by memory location(s) (managed or unmanaged), object(s) or instantiation(s) of a class(es), field(s) of object(s), static field(s) of class(es), or element(s) of array(s). The values stored in the referenced memory may be referred to as variable(s), and the VarHandle provides a safe interface through which developers can access constrained operations to perform on the variable(s). In an embodiment, the VarHandle accesses a variable via a receiver that holds the variable, such as an object instance holding a field or an array holding an element. At a low level, constrained operations are performed via a call to an "unsafe" method which communicates with the underlying computer hardware architecture and accesses arbitrary memory locations. In some embodiments, a VarHandle is implemented as a class and an instant ion of the class is referred to as a VarHandle instance or object.

For example, in the context of Java, constrained operations can be performed by calls to "sun.misc.Unsafe" which implements methods for performing constrained operations on arbitrary memory locations representing a variety of variables, such as Objects, ints, floats, chars, longs, doubles, and so forth. However, in many cases exposing these "unsafe" methods to software developers causes the risk that the memory locations may be manipulated in ways that the virtual machine cannot anticipate. This may result in run-time errors and/or crashes, such as segmentation faults, that the designers of the virtual machine endeavor to mitigate or prevent. In an embodiment, a VarHandle provides a safe way to expose these low level constrained operations to developers in a convenient and easy-to-use interface. Furthermore, in some embodiments, the virtual machine is configured to optimize the manner of access and safety checks to achieve virtually the same run-time performance as exposing a direct interface to the "unsafe" methods, but without the disadvantages of directly utilizing the "unsafe" method.

Thus, VarHandles are a mechanism to expose constrained operations to developers in a safe, convenient, and efficient manner that would greatly benefit the software community. For example, the field of "nonblocking algorithms" is a research area pertaining to high-performance concurrent data structures that use constrained access as a fundamental concurrency primitive. Thus, providing an environment where suitably skilled developers can implement such algorithms easily and safely would be a significant boon to the field.

### 2.0 EXAMPLE OPERATING ARCHITECTURE

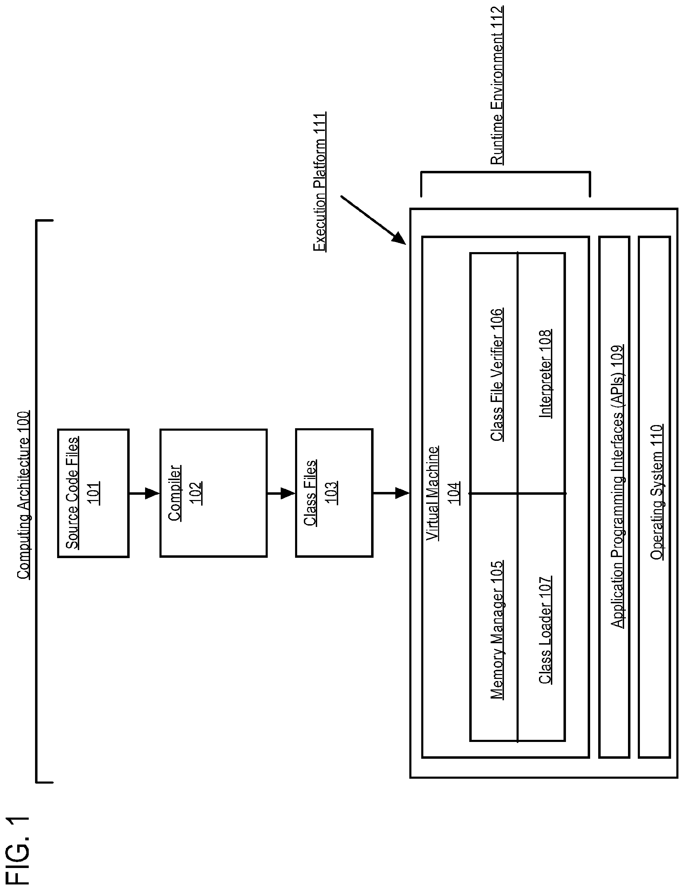

FIG. 1 illustrates an example computing architecture 100, including a runtime environment 112, in which techniques described herein may be practiced. The techniques described herein often use terms and definitions from the Java programming language, the JavaVirtual Machine ("JVM"), and the Java Runtime Environment. It is contemplated, however, that the described techniques may be used in conjunction with any programming language, virtual machine architecture, or run-time environment. Thus, for example, terminology described in Java terms, such as "methods", are interchangeable with other terminology, such as "fuctions". Furthermore, the term "method" is also synonymous with the terms "class method" or "object method". A method is a set of code which is referred to by name and can be called (invoked) at various points in a program, which causes the method's code to be executed.

As illustrated in FIG. 1, a runtime environment 112 includes a virtual machine 104. The virtual machine 104 includes various components, such as a memory manager 105(which may include a garbage collector), a class file verifier 106 to check the validity of virtual machine 104 code, a class loader 107 to locate and build in-memory representations of classes, and an interpreter 108 for executing the virtual machine 104 code (which may include a Just-in-Time "JIT" compiler). In some embodiments, the interpreter 108 implements aspects of both an interpreter and a JIT compiler.

In an embodiment, the computing architecture 100 includes source code files 101 that contain code that has been written in a particular programming language, such as Java, C, C++, C#, Ruby, Per1, and so forth. Thus, the source code files 101 adhere to a particular set of syntactic and/or semantic rules for the associated language. For example, code written in Java adheres to the Java Language Specification. However, since specifications are updated and revised over time, the source code files 101 may be associated with a version number indicating the revision of the specification to which the source code files 101adhere. The exact programming language used to write the source code files 101 is generally not critical.

In various embodiments, the compiler 102 converts the source code, which is written according to a specification directed to the convenience of the programmer, to either machine or object code, which is executable directly by the particular machine environment, or an intermediate representation, such as bytecode, which is executable by a virtual machine 104 that is capable of running on top of a variety of particular machine environments. The bytecode is executable by the virtual machine 104 in a more direct and efficient manner than the source code. Converting source code to bytecode includes mapping source code functionality from the language to virtual machine functionality that utilizes underlying resources such as data structures. Often, functionality that is presented in simple terms via source code by the programmer is converted into more complex steps that map more directly to the machine operations that would be caused during execution by the virtual machine 104.

In some embodiments, the interpreter 108 implements aspects of both an interpreter and a JIT compiler. For example, Oracle's HotSpot interprets code from "bytecode", but also locates portions of the bytecode that are executed frequently (are "hot") and compiles those portions into efficient machine code tailored to the processor of the underlying computer hardware. The run-time environment 120 may run on top of lower-level software such as an operating system 110 which, in some embodiments, is accessed through one or more application programming interfaces (APIs). The combination of the virtual machine 104, the APIs 109, and the operating system 110 is referred to as the execution platform 111.

In order to provide clear examples, the source code files 101 have been illustrated as the "top level" representation of the program to be executed by the execution platform 111. However, although the computing architecture 100 depicts the source code files 101 as a "top level" program representation, in other embodiments the source code files 101 may be an intermediate representation received via a "higher level" compiler that processed code files in a different language into the language of the source code files 101. In order to illustrate clear examples, the following disclosure assumes that the source code files 101 adhere to a class-based object-oriented programming language. However, this is not a requirement to utilizing the features described herein.

In an embodiment, compiler 102 receives as input the source code files 101 and converts the source code files 101 into class files 103 that are in a format expected by the virtual machine 104. For example, in the context of the JVM, Chapter 4 of the Java Virtual Machine Specification defines a particular class file format to which the class files 103 are expected to adhere. In some embodiments, the class files 103 contain the bytecode that has been converted from the source code files 101. However, in other embodiments, the class files 103 may contain other structures as well, such as tables identifying constant values and/or metadata related to various structures (classes, fields, methods, etc.).

The following discussion will assume that each of the class files 103 represents a respective "class" defined in the source code files 101 (or dynamically generated by the compiler 102/virtual machine 104). However, the aforementioned assumption is not a strict requirement and will depend on the implementation of the virtual machine 104. Thus, the techniques described herein may still be performed regardless of the exact format of the class files 103. In some embodiments, the class files 103 are divided into one or more "libraries" or "packages", each of which includes a collection of classes that provide related functionality. For example, a library may contain one or more class files that implement input/output (I/O) operations, mathematics tools, cryptographic techniques, graphics utilities, and so forth. Further, some classes (or fields/methods within those classes) may include access restrictions that limit their use to within a particular class/library/package or to classes with appropriate permissions.

### 2.1 EXAMPLE CLASS FILE STRUCTURE

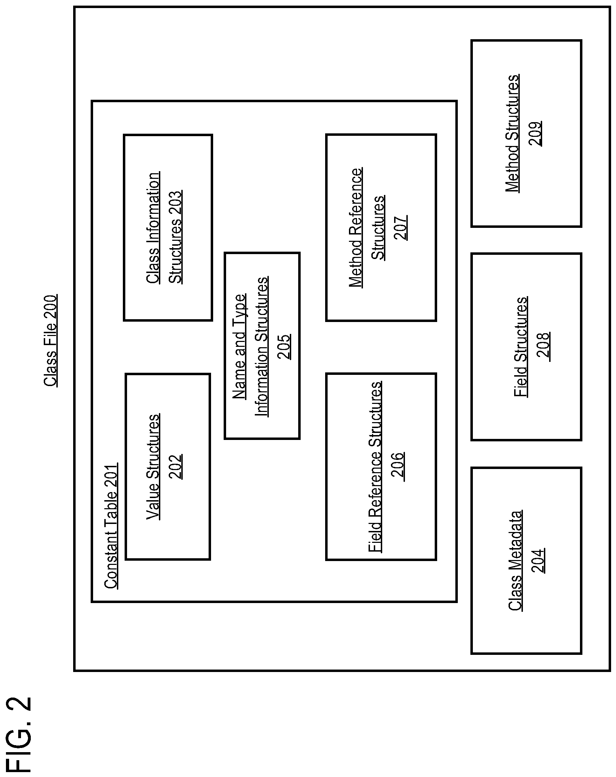

FIG. 2 illustrates an example structure for a class file 200 in block diagram form according to an embodiment. In order to provide clear examples, the remainder of the disclosure assumes that the class files 103 of the computing architecture 100 adhere to the structure of the example class file 200 described in this section. However, in a practical environment, the structure of the class file 200 will be dependent on the implementation of the virtual machine 104. Further, one or more features discussed herein may modify the structure of the class file 200 to, for example, add additional structure types. Therefore, the exact structure of the class file 200 is not critical to the techniques described herein. For the purposes of Section 2.1, "the class" or "the present class" refers to the class represented by the class file 200.

In FIG. 2, the class file 200 includes a constant table 201, field structures 208, class metadata 204, and method structures 209.

In an embodiment, the constant table 201 is a data structure which, among other functions, acts as a symbol table for the class. For example, the constant table 201 may store data related to the various identifiers used in the source code files 101 such as type, scope, contents, and/or location. The constant table 201 has entries for value structures 202 (representing constant values of type int, long, double, float, byte, string, and so forth), class information structures 203, name and type information structures 205, field reference structures 206, and method reference structures 207 derived from the source code files 101 by the compiler 102. In an embodiment, the constant table 201 is implemented as an array that maps an index *i* to structure *j.* However, the exact implementation of the constant table 201 is not critical.

In some embodiments, the entries of the constant table 201 include structures which index other constant table 201 entries. For example, an entry for one of the value structures 202 representing a string may hold a tag identifying its "type" as string and an index to one or more other value structures 202 of the constant table 201 storing char, byte or int values representing the ASCII characters of the string.

In an embodiment, field reference structures 206 of the constant table 201 hold an index into the constant table 201 to one of the class information structures 203 representing the class defining the field and an index into the constant table 201 to one of the name and type information structures 205 that provides the name and descriptor of the field. Method reference structures 207 of the constant table 201 hold an index into the constant table 201 to one of the class information structures 203 representing the class defining the method and an index into the constant table 201 to one of the name and type information structures 205 that provides the name and descriptor for the method. The class information structures 203 hold an index into the constant table 201 to one of the value structures 202 holding the name of the associated class. The name and type information structures 205 hold an index into the constant table 201 to one of the value structures 202 storing the name of the field/method and an index into the constant table 201 to one of the value structures 202 storing the descriptor.

In an embodiment, class metadata 204 includes metadata for the class, such as version number(s), number of entries in the constant pool, number of fields, number of methods, access flags (whether the class is public, private, final, abstract, etc.), an index to one of the class information structures 203 of the constant table 201 that identifies the present class, an index to one of the class information structures 203 of the constant table 201 that identifies the superclass (if any), and so forth.

In an embodiment, the field structures 208 represent a set of structures that identifies the various fields of the class. The field structures 208 store, for each field of the class, accessor flags for the field (whether the field is static, public, private, final, etc.), an index into the constant table 201 to one of the value structures 202 that holds the name of the field, and an index into the constant table 201 to one of the value structures 202 that holds a descriptor of the field.

In an embodiment, the method structures 209 represent a set of structures that identifies the various methods of the class. The method structures 209 store, for each method of the class, accessor flags for the method (e.g. whether the method is static, public, private, synchronized, etc.), an index into the constant table 201 to one of the value structures 202 that holds the name of the method, an index into the constant table 201 to one of the value structures 202 that holds the descriptor of the method, and the virtual machine 104 instructions that correspond to the body of the method as defined in the source code files 101.

In an embodiment, a descriptor represents a type of a field or method. For example, the descriptor may be implemented as a string adhering to a particular syntax. While the exact syntax is not critical, a few examples are described below.

In an example where the descriptor represents a type of the field, the descriptor identifies the type of data held by the field. In an embodiment, a field can hold a basic type, an object, or an array. When a field holds a basic type, the descriptor is a string that identifies the basic type (e.g., "B"= byte, "C" = char, "D" = double, "F" = float, "I" = int, "J" = long int, etc.). When a field holds an object, the descriptor is a string that identifies the class name of the object (e.g. "L *ClassName*"). "L" in this case indicates a reference, thus "L *ClassName"* represents a reference to an object of class *ClassName.* When the field is an array, the descriptor identifies the type held by the array. For example, "[B" indicates an array of bytes, with "[" indicating an array and "B" indicating that the array holds the basic type of byte. However, since arrays can be nested, the descriptor for an array may also indicate the nesting. For example, "[[L *ClassName"* indicates an array where each index holds an array that holds objects of class *ClassName.* In some embodiments, the *ClassName* is fully qualified and includes the simple name of the class, as well as the pathname of the class. For example, the *ClassName* may indicate where the file is stored in the package, library, or file system hosting the class file 200.

In the case of a method, the descriptor identifies the parameters of the method and the return type of the method. For example, a method descriptor may follow the general form "({*ParameterDescriptor})ReturnDescriptor*", where the {*ParameterDescriptor*} is a list of field descriptors representing the parameters and the *ReturnDescriptor* is a field descriptor identifying the return type. For instance, the string "V" may be used to represent the void return type. Thus, a method defined in the source code files 101 as "Object m(int I, double d, Thread t) {...}" matches the descriptor "(I D L Thread) L Object".

In an embodiment, the virtual machine 104 instructions held in the method structures 209 include operations which reference entries of the constant table 201.

Using Java as an example, consider the following class

```
class A
 {
 int add12and13() {
      return B.addTwo(12, 13);
         }
 }
```

In the above example, the Java method *add12and13* is defined in class A, takes no parameters, and returns an integer. The body of method *add12and13* calls static method *addTwo* of class *B* which takes the constant integer values 12 and 13 as parameters, and returns the result. Thus, in the constant table 201, the compiler 102 includes, among other entries, a method reference structure that corresponds to the call to the method *B.addTwo.* In Java, a call to a method compiles down to an *invoke* command in the bytecode of the JVM (in this case *invokestatic* as *addTwo* is a static method of class *B*)*.* The *invoke* command is provided an index into the constant table 201 corresponding to the method reference structure that identifies the class defining *addTwo* "B", the name of *addTwo* "addTwo", and the descriptor of *addTwo* "(II)I". For example, assuming the aforementioned method reference is stored at index 4, the bytecode instruction may appear as *"invokestatic #4".*

Since the constant table 201 refers to classes, methods, and fields symbolically with structures carrying identifying information, rather than direct references to a memory location, the entries of the constant table 201 are referred to as "symbolic references". One reason that symbolic references are utilized for the class files 103 is because, in some embodiments, the compiler 102 is unaware of how and where the classes will be stored once loaded into the runtime environment 112. As will be described in Section 2.3, eventually the run-time representation of the symbolic references are resolved into actual memory addresses by the virtual machine 104 after the referenced classes (and associated structures) have been loaded into the runtime environment and allocated concrete memory locations.

### 2.2 EXAMPLE VIRTUAL MACHINE ARCHITECTURE

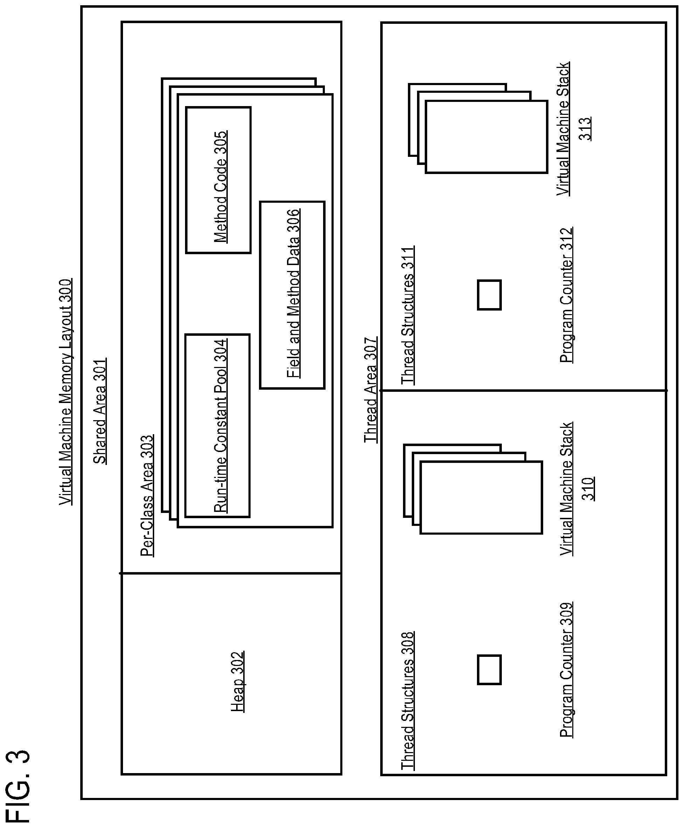

FIG. 3 illustrates an example virtual machine memory layout 300 in block diagram form according to an embodiment. In order to provide clear examples, the remaining discussion will assume that the virtual machine 104 adheres to the virtual machine memory layout 300 depicted in FIG. 3. In addition, although components of the virtual machine memory layout 300 may be referred to as memory "areas", there is no requirement that the memory areas are contiguous.

In the example illustrated by FIG. 3, the virtual machine memory layout 300 is divided into a shared area 301 and a thread area 307.

The shared area 301 represents an area in memory where structures shared among the various threads executing on the virtual machine 104 are stored. The shared area 301 includes a heap 302 and a per-class area 303. In an embodiment, the heap 302 represents the run-time data area from which memory for class instances and arrays is allocated. In an embodiment, the per-class area 303 represents the memory area where the data pertaining to the individual classes are stored. In an embodiment, the per-class area 303 includes, for each loaded class, a run-time constant pool 304 representing data from the constant table 201 of the class, field and method data 306 (for example, to hold the static fields of the class), and the method code 305 representing the virtual machine 104 instructions for methods of the class.

The thread area 307 represents a memory area where structures specific to individual threads are stored. In FIG. 3, the thread area 307 includes thread structures 308 and thread structures 311, representing the per-thread structures utilized by different threads. In order to provide clear examples, the thread area 307 depicted in FIG. 3 assumes two threads are executing on the virtual machine 104. However, in a practical environment, the virtual machine 104 may execute any arbitrary number of threads, with the number of thread structures scaled accordingly.

In an embodiment, thread structures 308 includes program counter 309 and virtual machine stack 310. Similarly, thread structures 311 includes program counter 312 and virtual machine stack 313. In an embodiment, program counter 309 and program counter 312 store the current address of the virtual machine instruction being executed by their respective threads. Thus, as a thread steps through the instructions, the program counters are updated to maintain an index to the current instruction. In an embodiment, virtual machine stack 310 and virtual machine stack 313 each store frames for their respective threads that hold local variables and partial results, and is also used for method invocation and return.

In an embodiment, a frame is a data structure used to store data and partial results, return values for methods, and perform dynamic linking. A new frame is created each time a method is invoked. A frame is destroyed when the method that caused the frame to be generated completes. Thus, when a thread performs a method invocation, the virtual machine 104 generates a new frame and pushes that frame onto the virtual machine stack associated with the thread. When the method invocation completes, the virtual machine 104 passes back the result of the method invocation to the previous frame and pops the current frame off of the stack. In an embodiment, for a given thread, one frame is active at any point. This active frame is referred to as the current frame, the method that caused generation of the current frame is referred to as the current method, and the class to which the current method belongs is referred to as the current class.

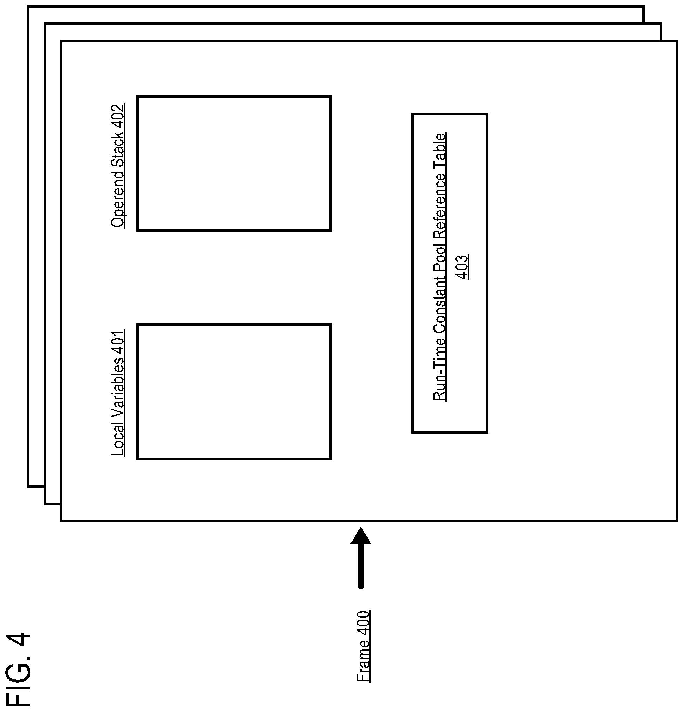

FIG. 4 illustrates an example frame 400 in block diagram form according to an embodiment. In order to provide clear examples, the remaining discussion will assume that frames of virtual machine stack 310 and virtual machine stack 313 adhere to the structure of frame 400.

In an embodiment, frame 400 includes local variables 401, operand stack 402, and run-time constant pool reference table 403.

In an embodiment, the local variables 401 are represented as an array of variables that each hold a value, such as Boolean, byte, char, short, int, float, reference, and so forth. Further, some value types, such as longs or doubles, may be represented by more than one entry in the array. The local variables 401 are used to pass parameters on method invocations and store partial results. For example, when generating the frame 400 in response to invoking a method, the parameters may be stored in predefined positions within the local variables 401, such as indexes 1-N corresponding to the first to Nth parameters in the invocation.

In an embodiment, the operand stack 402 is empty by default when the frame 400 is created by the virtual machine 104. The virtual machine 104 then supplies instructions from the method code 305 of the current method to load constants or values from the local variables 501 onto the operand stack 502. Other instructions take operends from the operand stack 402, operate on them, and push the result back onto the operand stack 402. Furthermore, the operand stack 402 is used to prepare parameters to be passed to methods and to receive method results. For example, the parameters of the method being invoked could be pushed onto the operand stack 402 prior to issuing the invocation to the method. The virtual machine 104 then generates a new frame for the method invocation where the operends on the operand stack 402 of the previous frame are popped and loaded into the local variables 401 of the new frame. When the invoked method terminates, the new frame is popped from the virtual machine stack and the return value is pushed onto the operand stack 402 of the previous frame.

In an embodiment, the run-time constant pool reference table 403 contains a reference to the run-time constant pool 304 of the current class. The run-time constant pool reference table 403 is used to support resolution. Resolution is the process whereby symbolic references in the constant pool 304are translated into concrete memory addresses, loading classes as necessary to resolve as-yet-undefined symbols and translating variable accesses into appropriate offsets into storage structures associated with the run-time location of these variables.

### 2.3 LOADING, LINKING, AND INITIALIZING

In an embodiment, the virtual machine 104 dynamically loads, links, and initializes classes. Loading is the process of finding a class with a particular name and creating a representation from the associated class file 200 of that class within the memory of the runtime environment 112. For example, creating the run-time constant pool 304, method code 305, and field and method data 306 for the class within the per-class area 303 of the virtual machine memory layout 300. Linking is the process of taking the in-memory representation of the class and combining it with the run-time state of the virtual machine 104 so that the methods of the class can be executed. Initialization is the process of executing the class constructors to set the starting state of the field and method data 306 of the class and/or create class instances on the heap 302 for the initialized class.

The following are examples of loading, linking, and initializing techniques that may be implemented by the virtual machine 104. However, in many embodiments the steps may be interleaved, such that an initial class is loaded, then during linking a second class is loaded to resolve a symbolic reference found in the first class, which in turn causes a third class to be loaded, and so forth. Thus, progress through the stages of loading, linking, and initializing can differ from class to class. Further, some embodiments may delay (perform "lazily") one or more functions of the loading, linking, and initializing process until the class is actually required. For example, resolution of a method reference may be delayed until a virtual machine 104 instruction invoking the referred method is executed. Thus, the exact timing of when the steps are performed for each class can vary greatly between implementations.

To begin the loading process, the virtual machine 104 starts up by invoking the class loader 107 which loads an initial class. The technique by which the initial class is specified will vary from embodiment to embodiment. For example, one technique may have the virtual machine 104 accept a command line argument on startup that specifies the initial class.

To load a class, the class loader 107 parses the class file 200 corresponding to the class and determines whether the class file 200 is well-formed (meets the syntactic expectations of the virtual machine 104). If not, the class loader 107 generates an error. For example, in Java the error might be generated in the form of an exception which is thrown to an exception handler for processing. Otherwise, the class loader 107 generates the in-memory representation of the class by allocating the run-time constant pool 304, method code 305, and field and method data 306 for the class within the per-class area 303.

In some embodiments, when the class loader 107 loads a class, the class loader 107 also recursively loads the super-classes of the loaded class. For example, the virtual machine 104 may ensure that the superclasses of a particular class are loaded, linked, and/or initialized before proceeding with the loading, linking and initializing process for the particular class.

During linking, the virtual machine 104 verifies the class, prepares the class, and performs resolution of the symbolic references defined in the run-time constant pool 304 of the class.

To verify the class, the virtual machine 104 checks whether the in-memory representation of the class is structurally correct. For example, the virtual machine 104 may check that each class except the generic class *Object* has a superclass, check that *final* classes have no sub-classes and *final* methods are not overridden, check whether constant pool entries are consistent with one another, check whether the current class has correct access permissions for classes/fields/structures referenced in the constant pool 304, check that the virtual machine 104 code of methods will not cause unexpected behavior (e.g. making sure a jump instruction does not send the virtual machine 104 beyond the end of the method), and so forth. The exact checks performed during verification are dependent on the implementation of the virtual machine 104. In some cases, verification may cause additional classes to be loaded, but does not necessarily require those classes to also be linked before proceeding. For example, assume Class A contains a reference to a static field of Class B. During verification, the virtual machine 104 may check Class B to ensure that the referenced static field actually exists, which might cause loading of Class B, but not necessarily the linking or initializing of Class B. However, in some embodiments, certain verification checks can be delayed until a later phase, such as being checked during resolution of the symbolic references. For example, some embodiments may delay checking the access permissions for symbolic references until those references are being resolved.

To prepare a class, the virtual machine 104 initializes static fields located within the field and method data 306 for the class to default values. In some cases, setting the static fields to default values may not be the same as running a constructor for the class. For example, the verification process may zero out or set the static fields to values that the constructor would expect those fields to have during initialization.

During resolution, the virtual machine 104 dynamically determines concrete memory address from the symbolic references included in the run-time constant pool 304 of the class. To resolve the symbolic references, the virtual machine 104 utilizes the class loader 107 to load the class identified in the symbolic reference (if not already loaded). Once loaded, the virtual machine 104 has knowledge of the memory location within the per-class area 303 of the referenced class and its fields/methods. The virtual machine 104 then replaces the symbolic references with a reference to the concrete memory location of the referenced class, field, or method. In an embodiment, the virtual machine 104 caches resolutions to be reused in case the same class/name/descriptor is encountered when the virtual machine 104 processes another class. For example, in some cases, class A and class B may invoke the same method of class C. Thus, when resolution is performed for class A, that result can be cached and reused during resolution of the same symbolic reference in class B to reduce overhead.

In some embodiments, the step of resolving the symbolic references during linking is optional. For example, an embodiment may perform the symbolic resolution in a "lazy" fashion, delaying the step of resolution until a virtual machine 104 instruction that requires the referenced class/method/field is executed.

During initialization, the virtual machine 104 executes the constructor of the class to set the starting state of that class. For example, initialization may initialize the field and method data 306 for the class and generate/initialize any class instances on the heap 302 created by the constructor. For example, the class file 200 for a class may specify that a particular method is a constructor that is used for setting up the starting state. Thus, during initialization, the virtual machine 104 executes the instructions of that constructor.

In some embodiments, the virtual machine 104 performs resolution on field and method references by initially checking whether the field/method is defined in the referenced class. Otherwise, the virtual machine 104 recursively searches through the super-classes of the referenced class for the referenced field/method until the field/method is located, or the top-level superclass is reached, in which case an error is generated.

### 3.0 VARHANDLES

In an embodiment, a VarHandle is an executable reference to memory, such as memory defined by memory location(s) (managed or unmanaged), object(s) or instantiation(s) of a class(es), field(s) of object(s), static field(s) of class(es), or element(s) of array(s). In some embodiments, VarHandles are implemented as a class which can be instantiated to create VarHandle instances/objects. In an embodiment, the VarHandle accesses a variable via a receiver that holds the variable, such as an object instance holding a field or an array holding an element. At a low level, constrained operations are performed via a call to low-level intrinsics which communicate with the underlying computer hardware architecture and accesses arbitrary memory locations. For example, in the context of Java, constrained operations can be performed by calls to "sun.misc.Unsafe" which implements methods for performing constrained operations on arbitrary memory locations representing a variety of variables, such as Objects, ints, floats, chars, longs, doubles, and so forth. However, in many cases exposing these "unsafe" methods to software developers causes the risk that the memory locations may be manipulated in ways that the virtual machine 104 cannot anticipate. This may result in run-time errors and/or crashes, such as segmentation faults, that the designers of the virtual machine 104 endeavor to mitigate or prevent.

One previous solution has been to restrict access to the "unsafe" methods to trusted developers who are known to have the expertise to use the "unsafe" methods in a safe and responsible manner. However, limiting access to the "unsafe" methods to a small sub-set of developers hinders the ability for other developers to create robust and efficient software products. In an embodiment, VarHandles provide a safe way to expose these low level constrained operations to developers in a convenient and easy-to-use interface. Furthermore, in some embodiments, the virtual machine 104 is configured to optimize the manner of access and safety checks to achieve virtually the same run-time performance as exposing a direct interface to the "unsafe" methods , without the disadvantages inherent permitting direct access to the "unsafe" methods

### 3.1 EXAMPLE CONSTRAINED OPERATIONS

The techniques described herein are applicable to virtually any type of constrained operations. However, in order to provide clear examples, the operations described in reference to VarHandles will include relaxed-get and relaxed-set, volatile-get and volatile-set, acquire-get and release-set (lazy get/set), and compare-and-set and get-and-set. However, different embodiments may implement different sets of constrained operations. For example, other embodiments may also support atomic addition, subtraction, or other atomic arithmetic operations.

In an embodiment, relaxed-get and relaxed-set perform relaxed fenced operations. In a relaxed fenced operation, ordering is guaranteed only within a particular thread's execution. Thus, if one thread performs stores, there is no guarantee that another thread would see the stores in the same order. For example, if Thread A performs Store 1 to variable *a,* and then performs Store 2 to variable *b,* there is a chance the store to variable *b* could become visible to another Thread B before the store to variable *a*.

In an embodiment, volatile-get and volatile-set perform volatile fenced operations. In a volatile fenced operation, sequential ordering is enforced between volatile stores and volatile loads. Thus, volatile fenced operations bypass local thread caches with reads and writes being performed straight to main memory.

In an embodiment, acquire-get and release-set perform lazy fenced operations. In lazy fenced operations, synchronization is performed between the release-set and the acquire-get to ensure that happens-before relationships can be carried over between threads at particular points during execution. For example, if Thread A performs Store 1 into variable *a* using relaxed-set and then performs Store 2 into variable *b* using release-set, the happens-before relationship between the storage of variable *a* and variable *b* is maintained with respect to a subsequent acquire-get. Thus, if Thread B were to read variable *b* using acquire-get after the storage to *b* becomes visible, there would be a guarantee that the storage to *a* would happen beforehand in Thread B's context. As a result, once the storage to *b* is made visible as a result of the acquire-get, the storage to *a* is also made visible to Thread B.

In an embodiment, compare-and-set is an atomic operation that compares the contents of a memory location to a given value and modifies the contents to a new value only if the comparison is true. In an embodiment, get-and-set is an atomic operation that writes a value to a memory location and returns the old value of the memory location.

In some embodiments, VarHandles also support "normal" or "unconstrained" access to variables which provide no guarantee as to the atomicity or reordering of the stores/loads to the variable in memory. Thus, embodiments as described herein apply to a broad range of ordering and atomicity constraints, including "null" constraints associated with "normal" memory access. Thus, in some embodiments, the "normal" or "unconstrained" access mode is an option among several options available using a VarHandle, each option imposing a different level of constraint on the memory access.

### 3.2 EXAMPLE INTERFACE

As mentioned above, VarHandles reference "receivers" which hold the variable, such as an object instance holding a field or an array holding an element. The types of "receivers" and the types of "variables" held by the "receivers" are implementation specific. The techniques described herein are applicable to virtually any type of "receiver" and "variable". However, the following represents examples of "receivers" and "variables" that may be accessed via a VarHandle.

In an embodiment, VarHandles hold references to one or more of (1) static fields, where the receiver is a class holding the static field, (2) instance fields, where the receiver is an instance of a class holding the field, or (3) an array element, where the receiver is an array holding that element at a defined index in the array. Thus, each receiver is associated with a particular type of variable access, such as (1) referring to static access, (2) referring to instance access, and (3) referring to array access.

However, in some embodiments, VarHandles represent receivers which refer to off-heap or an unmanaged memory location outside of the virtual machine 104. For example, rather than language-based receiver types such as classes holding fields/arrays holding elements, library-based receiver types may be used instead. In this case, a receiver type may be defined in a library with a corresponding VarHandle implementation that accepts instances of that class as a receiver. For instance, one such representation could be a receiver type that holds a base address to off-head/direct/unmanaged memory and a bound, where memory accesses are constrained to [base, base + bound]). The VarHandle would then store data related to that receiver type and use the base/bound accordingly to access memory.

In an embodiment, the variables held by the "receivers" include one or more of: *'Object'* references, statically typed *'Object'* references (subtype of '*Object*'), "int", or "long". However, other embodiments may have "receivers" that can hold many other types of primitive variables, such as floats, doubles, chars, and so forth. In addition, other embodiments may provide support for "receivers" that hold "primitive like" variables, such as strings. Furthermore, in other embodiments, the variables held by the "receivers" may represent memory areas outside of the heap 302 or even outside of the runtime environment 112. For example, VarHandles may represent references to structures in the memory area of a different virtual machine/runtime environment. For clarity, the italicized *Object* refers to a generic object structure which acts as a superclass to all other classes, as in the Java programming language. Other objects types are referred to as "statically typed objects" and are a sub-class of *Object.*

In some embodiments, a VarHandle performs constrained operations on a receiver holding a value type, as described in U.S. Provisional application 61/992,753, filed May 13, 2014.

In an example embodiment, assuming there are three types of receivers and four types of variables, the number of implementations are 12 (3 x 4) for each constrained operation. For example, an implementation that handles constrained accesses to static fields of *Objects,* arrays of statically typed objects, instance fields of ints, and so forth in various combinations. The combination of receiver type and variable type will be referred to as an "access type". Further, there are 9 (3 x 3) different interface shapes in the example embodiment since *Object* references and statically typed object references can share a common interface shape (both can be represented using the generic *Object* type), but have different implementations. For example, the latter might perform explicit type casting where as for the former type casting would be redundant. However, the number of implementations and/or interface shapes is dependent on the number of different access types supported by a given embodiment. Further, assuming there are eight different types of supported constrained operations, the example embodiment would possess 96 (8 * 12) different constrained operation implementations. For example, an implementation of relaxed-get where the receiver is a static field and the variable is a statically typed object, an implementation of volatile-set where the receiver is an instance field and the variable is an int, and so forth in various combinations.

In some embodiments, VarHandles are implemented using a separate abstract class for each interface shape, resulting in a collection of nine different abstract classes. The abstract classes can then be sub-classed by classes which implement (includes code for) the constrained operation methods for a given access type. For example, one-subclass may implement the case where the receiver is an array and the variable is a generic *Object* and another may implement the case where the receiver is an array and the variable is a statically typed object. Both share the same interface shape and thus can derive from the same abstract class, but provide different implementations. However, in order to simplify access to VarHandles, some embodiments define a single abstract class for VarHandles that includes a polymorphic method signature for each constrained operation. For example, in Java code, the abstract class might appear in part as,

```
              public abstract class VarHandle {
              // Relaxed accessors
              public final native
              @MethodHandle.PolymorphicSignature
              Object get(Object... args);
              public final native
              @MethodHandle.PolymorphicSignature
              Object set(Object... args);
              // Volatile accessors
              public final native
              @MethodHandle.PolymorphicSignature
              Object getVolatile(Object... args);
              public final native
              @MethodHandle.PolymorphicSignature
              Object setVolatile(Object... args);
              // Lazy accessors
              public final native
              @MethodHandle.PolymorphicSignature
              Object getAcquire(Object... args);
              public final native
              @MethodHandle.PolymorphicSignature
              Object setRelease(Object... args);
              // Compare and set accessor
              public final native
              @MethodHandle.PolymorphicSignature
              Object compareAndSet(Object... args);
              public final native
              @MethodHandle.PolymorphicSignature
              Object getAndSet(Object... args);
               ...}
```

The following examples reference *VarHandle* in order to illustrate clear examples, but the techniques described herein are not limited to the exact format of the class as it appears in *VarHandle* example.

In an embodiment, a polymorphic signature is a special type of signature that indicates the method can accept any arbitrary number of arguments and argument types as well as be of any return type. As a result, a subclass of *VarHandle* that implements the methods corresponding to the polymorphic signatures may use potentially any interface shape and still pass verification. Thus, one abstract class is sufficient to cover the different access types and developers can utilize the constrained operation methods of any sub-class of *VarHandle* in a relatively uniform manner.

In an embodiment, a *VarHandle* sub-class holds four method type descriptors corresponding to the four possible method descriptors of the constrained operations and a "varform" holding "membernames". For example, the descriptors for the "-get" operations can be the same, likewise for the "-set" operations since the argument and return types of those methods match. The method type descriptors held by the *VarHandle* subclass govern the method signatures of the implemented constrained operation methods. Thus, in order to properly use a constrained operation method, the call site invokes the method using the variables and return type specified by the corresponding descriptor. A "varform" represents the behavior of the different constrained operations. Thus, in the example embodiment, the varform holds eight "membernames", each characterizing the behavior of a different constrained operation method. For example, for each constrained operation, the corresponding "membername" may represent code or instructions for performing the constrained operation for the implemented access type.

### 3.3 VARHANDLE PROCESS FLOW FIELD EXAMPLE

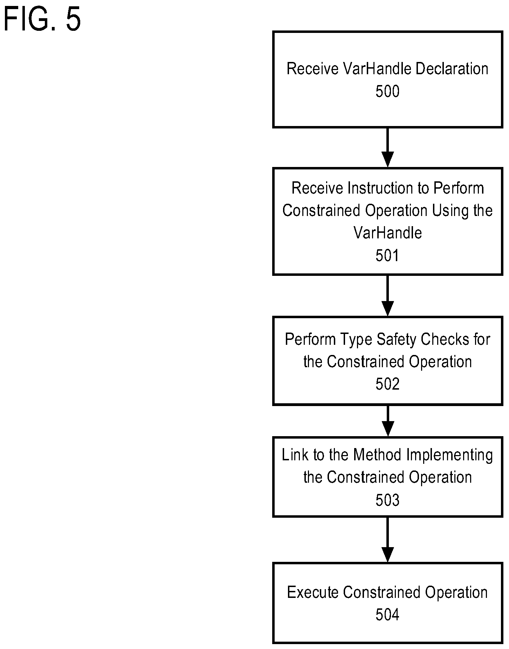

FIG. 5 illustrates an example process for performing a constrained operation using a VarHandle in block diagram form according to an embodiment. For the purposes of this section, the class that utilizes the VarHandle will be referred to as the "acting class" and it will be assumed that the VarHandle is defined using the example *VarHandle* abstract class.

In the following example, FIG. 5 will be described in reference to a *VarHandle* that accesses an instance field of a class. An additional example of using the process of FIG. 5 for array access will be described later in Section 3.4.

At block 500, the virtual machine 104 receives a declaration of a *VarHandle* instance. In some embodiments, the virtual machine 104 receives a declaration of a *VarHandle* instance via the class files 103 which have been compiled from the source code files 101 for the acting class. In an embodiment, a *VarHandle* instance to a field *"val"* of type *"Value"* held by receiver *"Receiver"* could be declared using the following example source code,

```
              VarHandle varHandleOfValueOnReceiver = VarHandles.lookup()
               .findFieldHandle(Receiver.class, "val", Value.class);
```

In an embodiment, *VarHandles* is a generator class that includes methods to return instances of various *VarHandle* sub-classes which implement the constrained operations for a particular access type. *lookup()* is a static method of class *VarHandles* that returns a lookup class which is utilized to return *VarHandle* subclass instances tied to a specified field (via the method *findFieldHandle*). For example, the *VarHandle* subclass instance generated by the lookup class may store descriptors for each method corresponding to the receiver and variable classes to which the *VarHandle* subclass instance is bound. In the above example declaration, *findFieldHandle* creates a *VarHandle* instance that accesses a field of a statically typed object of type *Receiver* named *"val",* where the field holds a statically typed object of type *Value.* Thus, for example, "-set" operations could be associated with the descriptor "(L *Receiver* L *Value)* V" and"-get" operations could be associated with the descriptor "(L *Receiver)* L *Value"* for the *VarHandle* assigned to *varhandleOfValueOnReceiver.*

As another example, in the case of a *VarHandle* to a static field of a class, the lookup class method may take the name of the class (or a *Class* object representing the class), the name of the static field within the class, and the class of the static field. In some embodiments, the lookup class performs access control checks to ascertain whether the acting class has the proper privileges to access the specified receiver and variable. For example, if the variable is declared private, classes outside the package defining the variable may not have sufficient privileges to access the variable, which would result in the lookup class generating an error. In some embodiments, access checks are performed when the *VarHandle* is created, rather than when a method of the *VarHandle* is invoked. In some cases, performing the access control check at lookup time reduces overhead by allowing the *VarHandle* to omit these access checks during invocation. As a result, in such embodiments, it is possible to pass the *VarHandle* to classes which otherwise would not have access permissions to the referenced receiver/variable. However, in some embodiments, the access checks may be performed again during invocation to prevent classes with inadequate permissions from invoking the *VarHandle* at the cost of less efficient run-time performance.

At block 501, the virtual machine 104 receives instruction of a constrained operation to perform using the *VarHandle.* For example, a volatile-set operation on *varHandleOfValueOnReceiver* may appear as follows,

```
              Receiver r = ...
              Value v = ...
              varHandleOfValueOnReceiver.setVolatile(r, v)
```

where *r* is an instance of class *Receiver,* v is an instance of class *Value,* and the method *setVolatile* is invoked on *varHandleOfValueOnReceiver* using *r* and *v* as parameters. In an embodiment, when the compiler 102 constructs the class file 200 for the acting class the method reference structures 207 of the constant table 201 includes a reference to class *VarHandle,* the name of the method *setVolatile* and a symbolic method descriptor of "(L *Receiver* L *Value*) V" signifying a method that takes an object of type *Receiver* and an object of type *Value* as parameters and has a return type of void. Further, in the virtual machine 104 code the call is converted to an invoke instruction that specifies the index into the constant table 201 for the aforementioned method reference to *setVolatile.*

As another example, in the case of a *VarHandle* to a static field of a class, *setVolatile* may be implicitly bound to the class, obviating the need to explicitly specify the receiver. For instance, the call may appear as *"varHandleOfValueOnReceiver.setVolatile(v)".* During the declaration, the *VarHandle* is bound to a class/type of the receiver and, since this is static access, there is only one possible receiver (the class itself).Thus, unlike the instance field case, the *VarHandle* already knows the exact receiver upon which to act. Whereas, in the instance field case, the *VarHandle* is bound to the receiver's type/class, but not to any particular receiver instance. As a result, the instruction that calls to a particular constrained function/method indicates a receiver by being implicitly bound to a receiver (such as in the static case) or specifies the receiver (such as in the case of an instance field). Thus, a *VarHandle* that performs instance access is able to perform operations on any receiver instance passed into the call, provided the receiver matches the type to which the *VarHandle* is bound during declaration.

As another example, a volatile-get operation on *varHandleOfValueOnReceiver* may appear as follows:

```
              Receiver r = ...
              Value v = (Value) varHandleOfValueOnReceiver.getVolatile(r);
```

Where *r* is an instance of *Receiver,* v is an instance of value, *(Value)* is a typecast on the return and *getVolatile* is invoked on *varHandleOfValueOnReceiver* using *r* as a parameter. In an embodiment, when the compiler 102 constructs the class file 200 for the acting class the method reference structures 207 of the constant table 201 includes a reference to class *VarHandle,* the name of the method *getVolatile* and a symbolic method descriptor of "(L *Receiver)* L *Value"* signifying a method that takes an object of type *Receiver* and returns an object of type *Value.* Further, in the virtual machine 104 code the call is converted to a invoke instruction that specifies the index into the constant table 201 for the aforementioned method reference to *getVolatile.* In some embodiments, *getVolatile* erases statically typed objects down to the most general form (type *Object*), thus the typecast on the return ensures that the compiler 102 can determine the return type for the symbolic method descriptor "(L *Receiver*)L *Value.* However, in other embodiments, the explicit type cast can be avoided if the compiler 102 can infer the return type from the local variable type on the left-hand-side of the expression (e.g. the compiler implements"target typing").

At block 502, the virtual machine 104 performs type safety checks for the constrained operation. In an embodiment, when an invocation instruction which references a polymorphic signature method is executed by the virtual machine 104, the linking step described above in Section 2.3 is replaced with a process referred to as "intrinsic linking". Under normal circumstances, using the volatile-set operation as an example, a linkage error would occur when the virtual machine 104 attempts to resolve the symbolic reference only to discover that no method is defined in class *VarHandle* matching the name *setVolatile* and the descriptor "(L *Receiver* L *Value*) V". However, in response to determining that the invoked method is signature polymorphic, the virtual machine 104 executes a predefined method associated with the access type of the invocation at the call site that performs a variety of type safety checks and executes the membername corresponding to the invoked method.

For example, polymorphic signature methods may be associated with a flag or a particular combination of attributes, such as setting the method as both *final* and *native* in the class file 200 of the *VarHandle* class. When invoking the method reference, the virtual machine 104 checks the flags to determine whether the method is signature polymorphic. If so, the virtual machine 104 calls a predefined method that is designed to handle the particular interface shape specified by the descriptor of the method reference. For example, the predefined method may erase classes down to generic *Objects* to cut down on the number of predefined methods by allowing different invocations that erase down to the same interface shape to use the same predefined method. Otherwise, the method is not signature polymorphic, and the virtual machine 104 proceeds with linking as described above in Section 2.3.

In some embodiments, the virtual machine 104 manipulates the operand stack 402 to provide additional information to the predefined method. For example, since the ordinary linking procedure is bypassed during intrinsic linking, there is no guarantee that the arguments provided to the invoked polymorphic signature method match the types specified during the *VarHandle* declaration. This could cause unexpected behavior, as the membername of the *VarHandle* instance invoked to perform the constrained operation might be relying on the size and/or access type of the receiver and variable classes specified during the *VarHandle* declaration. Upon invocation of the *setVolatile* method, the operand stack 402 would have pushed on it *r, v,* and *varHandleofValueonReceiver.* However, the virtual machine 104 may push additional data onto the stack, such a reference to the descriptor of the method reference structure indexed by the invocation instruction. Thus, in the predefined method, the virtual machine 104 can compare the descriptor stored by the *VarHandle* instance to the descriptor of the method invocation at the call site to ensure the argument and return types match those expected by the *VarHandle* instance's membername. If so, the predefined method invokes the membername to perform the constrained operation. Otherwise, an error is generated.

Thus, in some embodiments, intrinsic linking is performed in two parts (1) the virtual machine 104 automatically invokes a predefined method based on the erased descriptor of the method reference to perform type safety checks and (2) the virtual machine 104 invokes the membername of the *VarHandle* instance to perform the constrained operation. In some embodiments, during step (2), additional safety checks are performed, such as determining if the receiver is *null* or (in the case of an array access) determining whether the specified index is within bounds.

An example inlining trace of a volatile-set operation, when the handle is constant folded, is as follows:

```
              @ 13 java.lang.invoke.VarHandle::setVolatile_LL_V (37 bytes)
              inline (hot)
                  @ 5 java.lang.invoke.VarHandle::checkExactType (18 bytes)
                  inline (hot)
                  @ 18 java.lang.invoke.FieldInstanceRefHandle::setVolatile
                  (26 bytes) inline (hot)
                     @ 1 java.lang.Object::getClass (0 bytes) (intrinsic)
                     @ 19 java.lang.invoke.MethodHandleImpl::castReference (20
                     bytes) inline (hot)
                         @ 6 java.lang.Class::isInstance (0 bytes) (intrinsic)
```

In addition, an example predefined method for *setVolatile* that handles the erased signature of "(L *Object,* L *Object*) V" may appear as follows,

```
@ForceInline
              final static void setVolatile_LL_V(VarHandle handle, Object
                            receiver, Object value, Object symbolicMethodType)
                             {
                     checkExactType(handle.typeSet, symbolicMethodType);
                     try {
                            MethodHandle.linkToStatic(handle, receiver, value,
                                           handle.vform.setVolatile);
                      }
                     catch (Throwable t) {
                            throw new Error(t);
                      }
              }
```

In the example method *setVolatile_LL_V,* the first parameter is the *handle* which is an instance of class *VarHandle,* the second parameter is the receiver, the third parameter is the value, and the last parameter is a symbolic method descriptor. The example method *setVolatile_LL_V* first performs a method type descriptor check to determine whether the symbolic descriptor at the call site (the method call at the acting class) matches the call descriptor for "-set" operations stored by *handle.* If the descriptors do not match, an error is generated, such as throwing an exception to be caught by an exception handler. Otherwise, the *MethodHandle.linkToStatic* method is invoked with all the parameters except the *symbolicMethodType* added during the intrinsic linking to assist the predefined method. However, an additional parameter, *handle.vform.setVolatile* is added to the arguments, which represents the membername that implements the constrained operation. The try/catch block exists to catch exceptions that may be thrown by the *MethodHandle.linkToStatic* invocation. However, in other embodiments, the try/catch block can be avoided by utilizing an intrinsic linking method that avoids such declarations. In an embodiment, *@ForceInline* is used on intrinsically linked methods, which informs the JIT compiler of the interpreter 108 to inline the method regardless of the maximum inline limit and method size.

At block 503, the virtual machine 104 links to the method code that implements the constrained operation. In an embodiment, the method *MethodHandle.linkToStatic* links the method characterized by the 'membername' associated with a volatile-set (in above example, *handle.vform.setVolatile*). Thus, *MethodHandle.linkToStatic* causes the virtual machine 104 to perform resolution, resolving the method reference to *setVolatile* in the acting class to the *setVolatile* method code of the sub-class handling the access type of the declared *VarHandle.* In this case, the example declaration used the *lookup()* method assigned to *VarHandle* subtype *FieldInstanceRefHandle* and thus *linkToStatic* links the reference to the method code of *FieldInstanceRefHandle* that implements the constrained operation *setVolatile.* An example of the linked code implementing *setVolatile* for field instance access is as follows:

```
              @ForceInline
              static void setVolatile(FieldInstanceRefHandle handle, Object
                         receiver, Object value) {
                     receiver.getClass(); // null check
                     UNSAFE.putObjectVolatile(receiver,
                                (long) handle.fieldOffset,
                                castReference(handle.fieldType, value));
              }
```

The first parameter is the *'FieldInstanceRefHandle'* instance and the subsequent parameters are those passed to the *'VarHandle.setVolatile'* method. The *'FieldInstanceRefHandle'* instance holds the field offset to be used with the invocation of *'Unsafe.putObjectVolatile'.* Before that invocation: a safety check is performed to ensure the receiver instance is not 'null' (to avoid potential segmentation faults); and a cast check of the value is performed as an additional safety check.

At block 504, the virtual machine 104 executes the linked method code to perform the constrained operation. In the above example, the linked method code performs the set volatile operation via a call to *Unsafe.putObjectVolatile,* which stores *value* at the corresponding memory location in the specified constrained manner. For example, the virtual machine 104 may perform the constrained operation via one or more system calls to the operating system 110 or machine instructions presented to the processor of the underlying computer system. For example, to implement a memory fence operation, the virtual machine 104 may issue one or more memory barrier instructions natively supported by the underlying hardware in addition to loads and/or stores to the memory location of the variable. In some embodiments, the processor of the underlying computer hardware may not support native operations that perform the constrained operation. However, in such embodiments, the virtual machine 104 may cobble together multiple system calls or machine instructions that synthesize the same effect that the constrained operation would cause.

### 3.4 VARHANDLE PROCESS FLOW ARRAY EXAMPLE

The following is an example of the process flow of FIG. 5 applied to the case where the receiver is an array and the variable is a statically typed object. For the purposes of this section, the class that utilizes the VarHandle will be referred to as the "acting class" and it will be assumed that the VarHandle is defined using the example *VarHandle* abstract class.

At block 500, the virtual machine 104 receives a declaration of a VarHandle. In an embodiment, a *VarHandle* instance to an array element of component type *'Value'* held by a receiver of array type *'Value[]'* is declared using the following example source code,

```
              VarHandle varHandleOfValueArray = VarHandles.
              arrayHandle(Value[] .class);
```

where *VarHandles.arrayHandle* returns an instance of a *VarHandle* subclass implemented to handle array access.

At block 501, the virtual machine 104 receives an instruction to perform a constrained operation via the VarHandle. In an embodiment, a volatile-set operation on an array element *Value v* at index *i* of an instance of array type *Value[] r* is invoked via the following example source code:

```
              Value[] r = ...
              int i = ...
              Value v = ...
              varHandleOfValueArray.setVolatile(r, i, v)
```

In an embodiment, the method reference to setVolatile(r, i, v) includes the method descriptor "(L *Receiver* I L *Value*)V", signifying that the method takes an object of type Receiver, an integer, and an object of type Value with a return type of void.

In an embodiment, a volatile-get operation to a Value v from an array element at index i on an instance of array type *Value[] r* is invoked by the following example source code:

```
              Value[] r = ...
              int i = ...
              Value v = (Value) varHandleOfValueArray.getVolatile(r, i);
```

The corresponding symbolic method descriptor is "(L *Receiver* I) L *Value",* which matches the method type descriptor of the of the volatile-get operation.

At block 502, the virtual machine 104 performs type safety checks for the operation. In an embodiment, the invocation of *'VarHandle.setVolatile'* intrinsically links to '*VarHandle. setVolatile_LIL_V'*:

```
              @ForceInline
              final static void setVolatile_LIL_V(VarHandle handle, Object[]
                         holder, int index, Object value, Object
                         symbolicMethodType) {
                     checkExactType(handle.typeSet, symbolicMethodType);
                     try {
                            MethodHandle.linkToStatic(handle, holder, index,
                                    value, handle.vform.setVolatile);
                      }
                     catch (Throwable t) {
                            throw new Error(t);
                      }
              }
```

In *VarHandle.setVolatile_LIL_V* the type safety checking is performed by *checkExactType* which ensures that the method descriptor of the *handle* matches the *symbolicMethodType* of the parameters/return value used at the call site.

In an embodiment, the invocation of *'MethodHandle.linkToStatic'* links to the method characterized by the "membername" associated with a volatile-set. In this case, the *handle* was generated via *Varhandles.arrayHandle* which returns the *ArrayRefHandle* subtype of *VarHandle* and thus the membername links to the array implementation of the *setVolatile* method. In an embodiment, an example implemention of the linked method is as follows:

```
              @ForceInline
              static void setVolatile(ArrayRefHandle handle, Object[] array,
                         int index, Object value) {
                     if (index < 0 || index >= array.length) // bounds & null
                                ck
                            throw new ArrayIndexOutOfBoundsException();
                     UNSAFE.putObjectVolatile(array,(((long) index) <<
                                handle.ashift) +
                                handle.abase,castReference(handle.componentType,
                                value));
              }
```

The *'ArrayRefHandle'* instance holds the array base offset and array shift to calculate, from the *index,* the offset to be used with the invocation of '*Unsafe.putObjectVolatile'.* Before that invocation: safety checks are performed to ensure the *array* is not 'null' and the index is within the array bounds.

### 3.5 OPTIMIZATIONS

In an embodiment, the virtual machine 104 performs optimizations for VarHandles to reduce the burden imposed due to the intrinsic linking, type checks, and safety checks.

As one example, an optimization that may be performed by the virtual machine 104 is "constant folding". Constant folding is an optimization technique that evaluates expressions involving constants at compile time, rather than during execution. Thus, for example, the interpreter 108/JIT compiler may replace instructions that evaluate constants with instructions storing the result. For instance, "i= 100 + 105 + 109" would ordinarily push values on the stack and perform invocations of the add instruction. However, the virtual machine 104 may instead evaluate the expression ahead of time and replace the instructions with a single instruction that loads "314" into local variable i. Thus, when virtual machine 104 instructions are converted into machine code for execution, the run-time speed increases due to performing fewer and simpler operations.

As another example, an optimization that may be performed by the virtual machine 104 is "in-lining" or "inline expansion". During inlining the virtual machine 104 or a component thereof (such as the interpreter 108/JIT compiler), replaces a method invocation at a call cite with the body of the called method. Thus, the virtual machine 104 bypasses the overhead of processing the invocation and jumping execution from the body of one method to another. In an embodiment, when the virtual machine 104 intrinsically links the call to a constrained operation on a VarHandle, the virtual machine 104 may optimize by inlining some or all of the code that executed during the intrinsic linking.

As another example, an optimization that may be performed by the virtual machine 104 is caching the resolved *VarHandle* invocation and reusing that memory location for future invocations. Assuming the fields of the *VarHandle* that identify the bound receiver and variable types are static, the access permission check during lookup and the type safety check performed by the predefined method do not need to be performed again. Thus, the next time the same *VarHandle* method is invoked those checks can be skipped, resulting in runtime performance that is nearly on par with directly exposing the "unsafe" method.

As another example, an embodiment can declare a reference to a VarHandle as a constant value that cannot be changed once set. For example, in Java some implementations use the *"static final"* attributes to define such a field. Thus, using the Java example, a *static final* ref to a VarHandle instance "V" is considered constant, thus any *final* instance field on a class that can be traced back via a chain of reference dependencies to V is also considered constant. As a result, when the virtual machine 104 inlines a method call to V, the virtual machine 104 can constant fold away the instructions associated with the type checking, the link-to-static call can be inlined (since the last argument is known to be constant), and the explicit cast checks fold away as well.

### 3.6 RELAXING THE RETURN TYPE ON POLYMORPHIC SIGNATURE METHODS

In some embodiments, the return type of polymorphic signature methods, such as those used in the previous *VarHandle* examples, can be relaxed such that if the type is not a generic *Object* then that type is the return type encoded into the symbolic type descriptor for the method. For instance, in the illustrative embodiment, the *VarHandle* class may be modified to declare relaxed polymorphic signature methods, such that all set-based methods return 'void' and the compare-and-set method returns "boolean". As a result, in some instances, the typecasting in the above examples may be avoided since the return type could be inferred from the method signature. Example source code representing the relaxed polymorphic method signature for *VarHandle* follows in part,

```
abstract class VarHandle {
              ...
              public final native
              @MethodHandle.PolymorphicSignature
              void set(Object... args);
              ...
              public final native
              @MethodHandle.PolymorphicSignature
              boolean compareAndSet(Object... args);
              ...
              }
```

### 3.7 GENERIC POLYMORPHIC SIGNATURE METHODS

In an embodiment, the relaxing of the types of polymorphic signature methods is extended in exchange for declaring one abstract class per receiver type. Thus, such an abstract class would be able to support both primitive and reference value types.

In an embodiment, instead of one *VarHandle* abstract class, three classes are defined corresponding to each type of receiver:
- '*StaticFieldHandle<R, V*>' for static field access
- *'FieldHandle*<*R, V*>' for instance field access; and
- '*ArrayHandle*<*R, I, V*>' for array element access.
Type variables are declared for the receiver *R* and the value *V.* In addition for array access there is a type variable for the index *I* into the array. In some embodiments, the type variable *I* ensures access to elements in large arrays can be supported for indexes greater than a maximum integer value defined by the virtual machine 104. Furthermore, the receiver for an array, as with *VarHandle,* may be an array class, or could be some other type for an array-like structure, such as access to off-heap memory.

In some embodiments where static field access is likely to be rare, such access can be folded into *'FieldHandle*<*R, V*>' where constrained access methods accept a null value or ignore the value of the receiver. Thus, a null value for the receiver may act as a flag indicating whether to use static field access or instance field access for the declared *VarHandle.* As a result, the number of classes can be reduced at the expense of additional processing to determine whether static or field access is being performed.

In some embodiments, the above described classes could extend from *VarHandle* to retain the lower-level but more general mechanism, since methods on the sub-class will essentially override those of the super class.

In an embodiment, the mechanism by which methods are intrinsically linked for constrained operations remains identical to that previously described in Section 3.3 and thus the performance will remain relatively on par with the *VarHandle* examples. However, in some cases, the usability may be enhanced, as more errors are likely to be caught at compile time rather than runtime since invocations on a signature polymorphic method, in some implementations, might be compiled by the compiler 102 without regard to whether the descriptor for that invocation leads to a valid implementing method.

Consider the following example code for invocations on a *FieldHandle* that accesses an *int* field on an instance of type *Receiver:*

```
              FieldHandle<Receiver, Integer> fh = ...
              int a = 1;
              int b = 2;
              fh.compareAndSet(this, 1, 2);
              Integer ba = a;
              Integer bb = b;
              fh.compareAndSet(this, ba, bb);
```

In the example, the primitive type is represented as a boxed type. Packaging a primitive value in an object representing the primitive value is referred to as "boxing". By the same token, unpacking a boxed value back to the primitive form is referred to as "unboxing". In some embodiments, primitive types, such as ints, bytes, chars, longs, etc., cannot be erased to a more generic form. However, the boxed form can be erased to a generic *Object.* Thus, by boxing the primitive values, the primitive values can be generified.

In some embodiments, the first *'compareAndSet'* operations compiles to the following example virtual machine 104 code,

```
              10: invokevirtual #2 // Method
              java/lang/invoke/FieldHandle.compareAndSet: (LVarHandleTest;II)Z
              and the second to:
              32: invokevirtual #4 // Method
              java/lang/invoke/FieldHandle.compareAndSet: (LVarHandleTest;Ljav
              a/lang/Integer;Ljava/lang
```

where the first numbers ("10"/"32") represent the index of the virtual machine 104 code, *invoke virtual* is the command invoking an instance method which takes an argument indicating the index of the method reference in the constant table 201, and the comment contains the fully qualified path name of the class containing the method and a descriptor of the method being invoked.

Since primitive type *'int'* is compatible with its boxed type *'Integer',* the compiler 102 will successfully compile the first invocation and therefore the symbolic method descriptor will be equal to the method descriptor of the compare-and-set operation (e.g. in cases where the method is signature polymorphic, the compiler 103 will verify that 'int' is convertible to 'Integer', but will not generate the boxing instructions). For the second invocation the symbolic method descriptor will differ and therefore could result in a runtime exception. However, the invoke-exact semantics could be relaxed to instead perform transformations on the arguments to make the descriptor at the call site match the descriptor for the compare-and-set operation. For example, values could be automatically boxed or unboxed before and/or after basic invocation is performed.

In some embodiments, the transformations are extended to the receiver type and/or non-primitive value types, such as strings being converted from arrays of chars. In addition, in some embodiments, the compiler 102 encodes the class of the type parameter, if known, into the symbolic method descriptor rather than a possible sub-type.

In an embodiment, one or more of the methods of a VarHandle instance are defined to have a generic signature, and the virtual machine 104 reifiesthe generic signature at the call sites for some or all of the methods of the VarHandle instance in, for instance, compiled Java bytecode.

For example, consider the following Java code:

```
              public class Test {
                   static class Receiver {
                        Value v;
                   }
                   static class Value {
                   }
                   static abstract class FieldHandle<R, V> {
                        abstract boolean compareAndSet(R r, V a, V e);
                   }
                   public static void main(String[] args) {
                        FieldHandle<Receiver, Value> fh = null;
                        Receiver r = new Receiver();
                        Value a = new Value();
                        Value e = new Value();
                        fh.compareAndSet(r, a, e); // types are erased
                   }
              }
```

The invocation of *fh.compareAndSet in* the above class may be compiled to the following instruction:

```
              32: invokevirtual #6 // Method
              Test$FieldHandle.compareAndSet: (Ljava/lang/Object;Ljava/lang/Ob
              ject;Ljava/lang/Object;)Z
```

In the above example, parameters types associated with type variables '*R*' and '*V'*, in this case instances of *Receiver* and *Value* for the invocation, are erased to a generic *Object.* In embodiments where reifying the generic signature is implemented, *Receiver* and *Value* may be captured at the call site rather than erasing them, and an efficient pointer equality check can be performed of the method signature at the call site (symbolic type descriptor) with the expected method type descriptor (just like in the polymorphic signature case) before proceeding further in the knowledge that the types of the parameters passed to the method are correct.

### 3.8 CONSOLIDATION OF CODE VARHANDLES AND METHOD HANDLES

In some embodiments, in addition to VarHandles the virtual machine implements another access structure referred to as a MethodHandle that acts as a handle on a particular method. An example of a MethodHandle implementation can be found at the public Java documentation(http://docs.oracle.com/javase/8/docs/api/java/lang/invoke/MethodHandle.htm l)

As with VarHandles, some embodiments of MethodHandles utilize polymorphic signatures and intrinsic linking. For example, invoking the method to which a MethodHandle is bound may be performed using *.invoke([Parameters])* on a MethodHandle instance declared to a particular method using a *lookup* class. The invocation intrinsically links to a LamdaForm of the MethodHandle, which essentially acts as a wrapper to the implementing method and performs various actions and/or checks before invoking the implementing method.

In some embodiments, instead of VarHandles holding a Varform, the VarHandles hold a collection of LambdaForms corresponding to the different constrained operation methods. As a result, 'VarForm' instances can be cached and shared between VarHandle and MethodHandle instances. Furthermore, common 'VarForm' instances can be statically defined and therefore reduce startup costs. The LambdaForm essentially acts as a box to the membername, whose reference can be updated. An update can occur when a LamdaForm switches from interpreted to compiled (via the compiler 102). Specifically for static field access, the membername points to an implementation that checks if the class needs to be initialized (and if so does so), accesses the static field, and then updates the membername to an implementation that does not perform static access and just accesses the field. Furthermore, some embodiments may implement methods for VarHandles that returns a MethodHandle to a particular constrained operation.

In some embodiments, as an alternative, field-based direct method handles referring to methods on a VarHandle instance could be generated to reduce the quantity of spinning classes at the expense of a new form of class spinning.

### 3.9 MEMORY FENCES

A memory fence is a type of barrier instruction which causes a processor, such as a CPU, or a compiler to enforce an ordering constraint on memory operations issued before and after the barrier instruction. Thus, operations issued prior to the barrier are guaranteed to be performed before operations issued after the instruction. One reason that memory fences are employed is due to the fact that CPUs and compilers often employ performance optimizations that can result in out-of-order execution. For a single thread of execution, the optimizations are usually designed to ensure that the semantics of the program are undisturbed, such as omitting a load instruction for data that is never actually used by the program or retrieving a value from a buffer or cache instead of main memory. However, for multi-threaded programs the reordering of memory operations can cause unpredictable behavior unless carefully controlled. A memory fence does not necessarily store or load data to a memory location, but instead controls when values can be read from the buffer/cache and when the buffer/cache should be flushed to main memory.

Virtually all processors support at least a general barrier instruction that guarantees that all loads and stores initiated before the fence will be strictly ordered before any load or store initiated after the fence. However, many processors also support more fine-grained barriers that provide fewer ordering guarantees, but often cause less overhead.

In an embodiment, the virtual machine 104 supports VarHandles that can access the various fencing operations of the underlying hardware architecture (or a virtualized software construct, such as the virtual machine 104). For example, a VarHandle may be extended to include additional methods which, instead of calling an "unsafe" method that performs an atomic operation, intrinsically link to a membername that issues barrier instructions. The exact barrier instructions supported by the VarHandle may be governed by the underlying architecture of the hardware. For example, the underlying processor or multiprocessor may support a machine-level instruction that is equivalent to the desired memory fence. However, in other embodiments, the underlying hardware may not support the desired memory fence. As a result, in some embodiments, the virtual machine 104 synthesizes the memory fence operation by implementing the fence in software, essentially using a combination of other machine-level instructions to achieve the same effect.

The following are a few examples of memory fences that may be access via a VarHandle.
(1) LoadLoad Barrier - Sequence (Load1; LoadLoad; Load2), ensures that Load1's data are loaded before data accessed by Load2 and all subsequent load instructions are loaded. In some embodiments, LoadLoad barriers are used for processors that perform speculative loads and/or out-of-order processing in which waiting load instructions can bypass waiting stores.
(2) StoreStore Barrier- Sequence (Store1; StoreStore; Store2), ensures that Store1's data are visible to other processors before the data associated with Store2 and all subsequent store instructions. For example, StoreStore barriers are often used on processors that do not otherwise guarantee strict ordering of flushes from write buffers and/or caches to other processors or main memory.
(3) LoadStore Barrier- Sequence (Load1; LoadStore; Store2) - ensures that Load1's data are loaded before all data associated with Store2 and all subsequent store instructions. For example, StoreStore barriers are often used on processors that do not otherwise gurantee strict ordering of flushes from write buffers and/or caches to other processors or main memory.
(4) StoreLoad Barriers - Sequence (Store1; StoreLoad; Load2) - ensures that Store1's data are made visible to other processors before data accessed by Load2 and all subsequent load instructions are loaded. StoreLoad barriers protect against a subsequent load incorrectly using Store1's data value rather than that from a more recent store to the same location performed by a different processor.

In some embodiments, the virtual machine 104 synthesizes fences using supported barrier instructions in situations where the underlying hardware does not support the fence natively. For example, assume that the underlying hardware does not provide native support for release-set and acquire-get lazy operations, but supports the example barrier instructions listed above. An acquire fence could be synthesized by combining a load-load barrier instruction with a load-store barrier instruction and a release fence could be synthesized by combining a store-load barrier instruction with a store-store barrier instruction. In some embodiments, the aforementioned acquire/release fences can then be issued to the hardware and/or used to to implement the release-set/acquire-get lazy fenced operations.

### 3.10 EXTENSIONS OF VARHANDLE FUNCTIONALITY

Although VarHandles have been described as providing efficient and safe access to atomic operations and memory barrier instructions, VarHandles are not limited to these functionalities. In other embodiments, VarHandles could be extended to provide access to virtually any type of functionality, such as hardware features that do not fall within the categories of atomic operations and memory barrier instructions.

### 4.0 HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

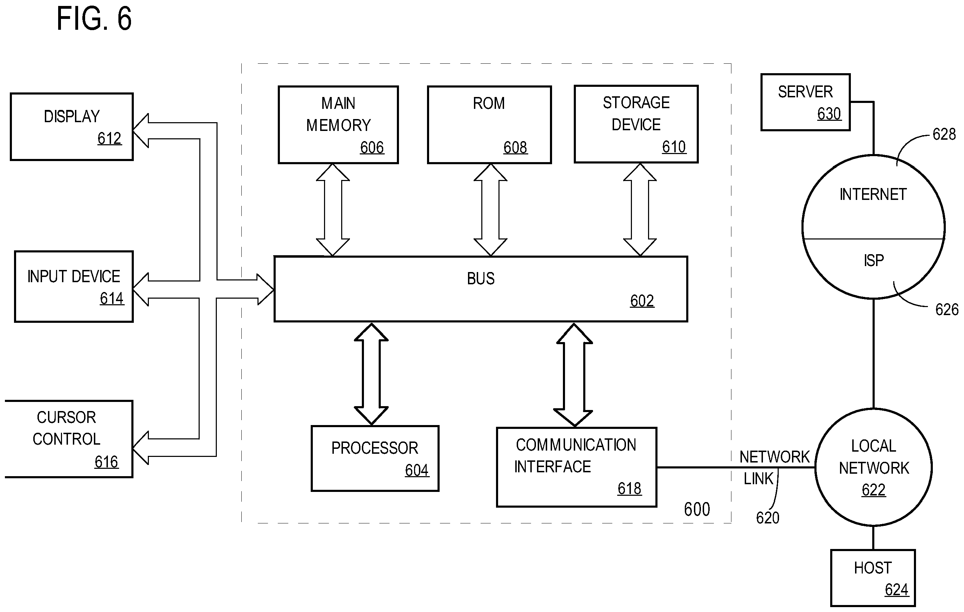

For example, FIG. 6 is a block diagram that illustrates a computer system 600 upon which an embodiment of the invention may be implemented. Computer system 600 includes a bus 602 or other communication mechanism for communicating information, and a hardware processor 604 coupled with bus 602 for processing information. Hardware processor 604 may be, for example, a general purpose microprocessor.

Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Such instructions, when stored in non-transitory storage media accessible to processor 604, render computer system 600 into a special-purpose machine that is customized to perform the operations specified in the instructions.

Computer system 600 further includes a read only memory (ROM) 608 or other static storage device coupled to bus 602 for storing static information and instructions for processor 604. A storage device 610, such as a magnetic disk, optical disk, or solid-state drive is provided and coupled to bus 602 for storing information and instructions.

Computer system 600 may be coupled via bus 602 to a display 612, such as a light emitting diode (LED) display, for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

Computer system 600 may implement the techniques described herein using customized hard-wired logic, one or more ASICs or FPGAs, firmware and/or program logic which in combination with the computer system causes or programs computer system 600 to be a special-purpose machine. According to one embodiment, the techniques herein are performed by computer system 600 in response to processor 604 executing one or more sequences of one or more instructions contained in main memory 606. Such instructions may be read into main memory 606 from another storage medium, such as storage device 610. Execution of the sequences of instructions contained in main memory 606 causes processor 604 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical disks, magnetic disks, or solid-state drives, such as storage device 610. Volatile media includes dynamic memory, such as main memory 606. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 602. Transmission media can also take the form of acoustic or light waves, such as those generated during radio-wave and infra-red data communications.

Various forms of media may be involved in carrying one or more sequences of one or more instructions to processor 604 for execution. For example, the instructions may initially be carried on a magnetic disk or solid-state drive of a remote computer. The remote computer can load the instructions into its dynamic memory and send the instructions over a telephone line using a modem. A modem local to computer system 600 can receive the data on the telephone line and use an infra-red transmitter to convert the data to an infra-red signal. An infra-red detector can receive the data carried in the infra-red signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card, cable modem, satellite modem, or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the world wide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are example forms of transmission media.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618.

The received code may be executed by processor 604 as it is received, and/or stored in storage device 610, or other non-volatile storage for later execution.

As used herein, the terms "first," "second," "certain," and "particular" are used as naming conventions to distinguish queries, plans, representations, steps, objects, devices, or other items from each other, so that these items may be referenced after they have been introduced. Unless otherwise specified herein, the use of these terms does not imply an ordering, timing, or any other characteristic of the referenced items.

### 5.0 EXTENSIONS AND ALTERNATIVES

In the foregoing specification, embodiments of the invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

### 6.0 ADDITIONAL DISCLOSURE

Aspects of the subject matter described herein are set out in the following numbered clauses:
1. A method comprising: identifying a first instruction to create a variable handle instance, the first instruction including declaration information that identifies a type of a receiver and a variable held by the receiver to which the variable handle instance is configured to provide access; responsive to the first instruction, and based on the declaration information, performing one or more checks to determine whether access to the variable is permissible; in response to a determination that access to the variable is permissible, creating the variable handle instance, the variable handle instance comprising one or more constrained functions configured to execute constrained operations on a memory location of the variable; identifying a second instruction that specifies a call to a particular constrained function of the one or more constrained functions of the variable handle instance, wherein the second instruction indicates the receiver; and identifying a particular memory location where the variable is stored and causing performance of the particular constrained function with respect to the particular memory location.
2. The method of Clause 1, wherein the receiver is a class and the variable is a static field held by the class, the receiver is a class instance and the variable is a field held by the class instance, the receiver is an array and the variable is an element of the array, or the receiver is a reference to an off-heap or direct memory location representing the variable.
3. The method of any of Clauses 1-2, wherein the first instruction calls a lookup function that causes the variable handle instance to store an offset of the variable within the receiver and binds the one or more constrained functions of the variable handle instance to one or more descriptors that identify a type of the receiver and a type of the variable.
4. The method of any of Clauses 1-3, wherein the method is performed by a virtual machine managing a first memory area and the instance of the variable is stored in a second memory area that is external to the first memory area managed by the virtual machine.
5. The method of any of Clauses 1-4, wherein the first instruction is derived from a particular class and determining whether access to the variable held by the receiver is permissible is based on whether the particular class has permission to access the variable held by the receiver.
6. The method of any of Clauses 1-5, further comprising in response to determining that access to the variable held by the receiver is not permissible, generating an access error.
7. The method of any of Clauses 1-6, wherein the method is performed by a virtual machine and virtual machine performs the constrained operations by generating machine code instructions supported by hardware upon which the virtual machine is executing.
8. The method of Clause 7, wherein the constrained operations include at least one constrained operation that is not natively supported by the hardware and further comprising synthesizing the constrained operation using a collection of machine code instructions supported by the hardware.
9. The method of any of Clauses 1-8, wherein the constrained operations perform one or more of: relaxed operations, volatile operations, lazy operations, compare-and-set operations, or get-and-set operations.
10. The method of any of Clauses 1-9, wherein the second instruction comprises one or more parameters for the particular constrained function.
11. The method of Clause 10, wherein the one or more parameters include one or more of: an array index into the instance of the receiver at which the instance of the variable is located or a value to store to the particular memory location of the instance of the variable.
12. The method of any of Clauses 1-11, further comprising: performing a check to ensure that the instance of the receiver specified by the second instruction matches a type of the receiver identified by the declaration information.
13. The method of any of Clauses 1-12, wherein causing performance of the particular constrained function with respect to the particular memory location comprises calling a function that interacts with arbitrary memory locations via one or more hardware instructions.
14. The method of any of Clauses 1-13, wherein the function that interacts with arbitrary memory locations does not perform type checking.
15. The method of any of Clauses 1-14, wherein the one or more constrained functions of the variable handle instance include functions corresponding to one or more atomic arithmetic operations.
16. The method of any of Clauses 1-15, wherein the variable handle instance is derived from a variable handle sub-class that extends an abstract variable handle class, the abstract variable handle class providing one or more interfaces for the one or more constrained functions and the variable handle sub-class implementing the one or more constrained functions with respect to a particular access type.
17. The method of any of Clauses 1-16, further comprising: in response to a determination that the particular constrained function called by the second instruction is signature polymorphic, automatically invoking a predefined function based on a descriptor of a reference representing the call to the particular constrained function, wherein the predefined function performs a type check and invokes the function of the variable handle that performs the particular constrained function.
18. The method of Clause 17, wherein determining that the particular constrained function is signature polymorphic is performed by checking one or more flag associated with the particular constrained function in a run-time representation of the abstract variable handle class.
19. The method of any of Clauses 17-18, wherein the type check is performed by comparing one or more parameters and a return type of the call to the particular constrained function to a descriptor associated with the particular constrained function for the variable handle instance as a result of creating the variable handle instance based on the declaration information.
20. The method of any of Clauses 17-19, wherein invoking the particular constrained function of the variable handle instance includes at least resolving a symbolic reference to the particular constrained function in a constant pool to a concrete memory reference representing a location of the particular constrained function in run-time memory.
21. The method of Clause 20, further comprising caching the location of the particular constrained function in run-time memory to reuse during a future call to the particular constrained function of the variable handle instance.
22. The method of any of Clauses 17-20, wherein the particular constrained function of the variable handle instance at least performs one or more safety checks which, if successful, cause invoking an unsafe function that accesses the particular memory location and performs constrained operations corresponding to the particular constrained function.
23. A method comprising: generating an object configured to provide secure access to memory through one or more memory fencing operations; through the object, receiving a call that indicates a memory location and specifies a particular memory fencing operation of the one or more memory fencing operations to perform with respect to the memory location; causing performance of the particular memory fencing operation with respect to the memory location; and wherein the method is performed by one or more processors.
24. The method of Clause 23, wherein the object is related to a class that defines the one or more memory fencing operations, but without including an implementation of the one or more memory fencing operations for any particular variable kind of a plurality of different variable kinds.
25. The method of Clause 24, wherein the plurality of different variable kinds includes one or more of: instance field variable, static field variable, array element variable, or off-heap variable.
26. The method of any of Clauses 24-25, wherein the object is an instance of a sub-class that extends from the class and implements the one or more memory fencing operations with respect to a particular variable kind of the plurality of different variable kinds.
27. The method of any of Clauses 24-25, further comprising: generating a second object that is an instance of the class; through the second object, receiving a second call that indicates a second memory location and specifies a second particular memory fencing operation of the one or more memory fencing operations to perform with respect to the second memory location, wherein the memory location in memory represents a first variable type and the second memory location represents a second variable type, wherein the first variable type is different than the second variable type; and causing performance of the particular memory fencing operation with respect to the second memory location.
28. The method of Clause 27, wherein the first variable type and the second variable type are one or more of: int, long, float, double, or object reference.
29. The method of any of Clauses 23-28, wherein generating the object binds the object to a first variable type, wherein the call specifies to access the memory location to perform the particular memory fencing operation based on a second variable type, and the method further comprising: determining whether the first variable type matches the second variable type, wherein causing performance of the particular memory fencing operation with respect to the memory location is performed in response to determining that the first variable type matches the second variable type; in response to determining that the first variable type does not match the second variable type performing one or more of: generating an error or conforming the first variable type to the second variable type then causing performance of the particular memory fencing operation with respect to the memory location.
30. The method of any of Clauses 23-29, wherein generating the object comprises performing a check to determine whether access to the location is permissible, and the method further comprising receiving multiple calls through the object to perform memory fencing operations without repeating the check.
31. The method any of Clauses 23-30, wherein the particular memory fencing operation is performed by at least issuing one or more memory barrier instructions natively supported by the one or more processors in addition to one or more load or store instructions to the memory location.
32. The method of Clause 31, wherein the particular memory fencing operation is performed by combining two or more of the one or more memory barrier instructions natively supported by the one or more processors.
33. The method of any of Clauses 23-32, further comprising: receiving a second call through the object that specifies a second memory fencing operation that is different than the particular memory fencing operation to perform with respect to the memory location; and causing performance of the second memory fencing operation with respect to the memory location.
34. The method of any of Clauses 23-33, wherein causing performance of the particular memory fencing operation involves invoking code associated with the object that performs one or more safety checks including one or more of: determining that one or more parameters passed into the call match a set of parameters expected by the object, determining whether a reference to the memory location passed into the call is null, or determining whether an array index passed into the call is valid.
35. The method of any of Clauses 23-34, wherein the memory fencing operations include operations for one or more access modes including one or more of: relaxed read, relaxed write, volatile read, volatile write, atomic read, atomic write, or atomic update.
36. One or more non-transitory computer-readable media storing instructions that, when executed by one or more computing devices, causes performance of any one of the methods recited in Clauses 1-35.
37. A system comprising one or more computing devices comprising components, implemented at least partially by computing hardware, configured to implement the steps of any one of the methods recited in Clauses 1-35.

### 7.0 SECOND ADDITIONAL DISCLOSURE

Additional embodiments of the invention are disclosed below. Furthermore, this section includes additional description pulled from various specifications written for the Java Virtual Machine (JVM) that in some embodiments are used to implement the techniques discussed herein. However, there is no requirement that an embodiment use any or all of the features discussed in this section.

Techniques are described herein for providing secure and efficient exotic access to memory locations through the use of "handles" that support a variety of different memory access modes. The handles provide several levels of abstraction with respect to operations on these memory locations. One of these abstractions concerns the nature of the memory locations themselves, in that the memory locations may store any of a variety of types of fields or other data structures. The memory locations may be locations that are managed by a language runtime, such as a virtual machine or interpreter, and/or locations that are "unmanaged," in that they are managed by a memory manager outside of the language runtime (e.g. memory allocated by the operating system to applications that do not run within the language runtime). Another one of these abstractions concerns the memory access modes that the handles support, in that a handle does not lock down a memory location to a specific memory access mode, as typically occurs with variables, but rather may provide any memory access mode that is permitted by the interpreter and supported by the underlying hardware.

According to an embodiment, a method for utilizing these handles comprises generating an object structure configured to provide secure access to memory through different memory fencing operations. For instance, the object structure may be an instance of the VarHandle class (as described herein) or any other suitable class that is abstractly defined to provide arbitrary modes of access to arbitrary types of data structures. Examples of memory fencing operations are described subsequently. Though for convenience the handle is described herein as an object structure, it will be appreciated that the handle may be any suitable construct, depending on the programming language, and need not necessarily be limited strictly to objects or even object-oriented constructs.

The method further comprises receiving a call through the object structure, such as to a method defined by its class, that indicates a location in memory, and that specifies which one of the memory fencing operations to perform with respect to the indicated location in memory. The call may indicate the location using a variety of conventions, such as by referencing a location managed by a language runtime (e.g. a virtual machine or interpreter) that implements the method, by specifying a previously declared and/or instantiated field of another object, by referencing a static field, by referencing an array element, or by referencing a location not managed by the language runtime, such as a location that has not been allocated to the language runtime or a location that is allocated and/or managed by a process other than or independent of the language runtime (e.g. a location "off-heap").

The method further comprises causing performance of the specified memory fencing operation with respect to the indicated location. For instance, logic defined by and/or otherwise associated with the class of the object structure may be executed to perform the memory fencing operation, and/or issue a low-level instruction to executing hardware that results in that hardware performing the memory fencing operation.

As used herein, a memory fencing operation, also known as a memory barrier, memory fence, or fence instruction, is a type of barrier instruction which causes a central processing unit (CPU) or compiler to enforce an ordering constraint on memory operations issued before and after the barrier instruction. Memory barriers may be necessary because many modern CPUs employ performance optimizations that can result in out-of-order execution. This reordering of memory operations (loads and stores) normally goes unnoticed within a single thread of execution, but can cause unpredictable behaviour in concurrent programs and device drivers unless carefully controlled. The exact nature of an ordering constraint is hardware dependent and defined by the architecture's memory ordering model. Some architectures provide multiple barriers for enforcing different ordering constraints

In an embodiment, generating the object structure comprises performing a check to determine whether access to the location and/or a data type associated with the location is permissible within a current execution context. The method further comprises receiving multiple calls through the object structure to perform memory fencing operations without repeating the check.

In an embodiment, the method is performed by a language runtime based on instructions in, for instance, lower-level code (such as Java bytecode or any other code compiled from human-readable source code). The method further comprises determining how to perform the specified memory fencing operation based on determining a machine memory architecture and/or instruction set that is natively supported by hardware upon which the language runtime is being implemented. The method further comprises selecting a specific memory fencing instruction in the instruction set that performs the specified memory fencing operation.

In an embodiment, the method further comprises generating multiple object structures that are instances of the class. The method further comprises receiving calls, through the multiple object structures, to perform memory fencing operations with respect to different types of data structures (e.g. different primitive types, different value types, etc.). The calls specify the data structures and/or types of data structures. The method further comprises causing performance of the specified memory fencing operations based on logic in or associated with the class. A single class thereby provides an abstract handle on a variety of types of data structures.

In an embodiment, the method further comprises receiving multiple calls through the object structure that specify different memory fencing operations to perform with respect to the same memory location, the different memory fencing operations including at least two operations having different memory access modes (e.g. any combination of volatile, lazy, relaxed, normal, etc.). A single class thereby provides multiple memory access modes for the same memory location.

According to an embodiment, another method for utilizing the described handles (which may in some cases, but not necessarily all cases, constitute a specific instance of the previously described method), comprises identifying a first instruction to create a variable handle object. One example of such an instruction may be a variable declaration that includes a call to a "lookup" method such as a method similar to the VarHandles.Lookup described herein, or to an equivalent invocation of such a method in, for instance, Java bytecode. The first instruction includes configuration information that indicates at least a structure type for which the variable handle object is configured to provide access. For instance, the configuration information may specify any suitable combination of one or more of: an object class or data structure type, a field name corresponding to a field defined for the object class or data structure type, and/or a field class or type. As another example, the configuration information may reference an unmanaged memory location, including a memory location that has not been allocated to a language runtime, such as a virtual machine, that is executing the first instruction.

The method further comprises, responsive to the first instruction, and based on the configuration information, performing one or more checks to determine whether access to the structure type is permissible. For instance, an access check may be performed to determine whether various rules or declarations associated with the structure type, such as a "private" or "public" declaration, permit access to instances of the structure type from within a current execution context, such as a function or method in which the variable handle object was created. Another example check that may be performed is to determine whether the structure type actually exists. Optionally, the method further comprises throwing an error if one or more of the checks fail. For example, an error may be thrown indicating that the referenced type of structure could not be found, or that access to the type of structure would not be permitted in accordance with a security rule associated with the type of structure, such as if the structure type is private.

The method further comprises, if access to the structure type is permissible, then creating the variable handle object. The variable handle object comprising methods configured to execute atomic operations on a memory location of the structure type. Examples of such atomic operations may include, for instance, a memory fencing operation or an operation that correspond directly to a low-level hardware instruction that could be supported by hardware on which the language runtime is implemented. Optionally, the operations may include at least one memory fencing operation that is not supported by a default memory fencing mode that the language runtime is configured to use on the structure type. For instance, a memory access may be mode implied by virtue of how the field was declared. That is, if the field type was declared as "volatile," then a language runtime will during the normal course of operation only be able to execute instructions that read or write to fields of that type using a volatile memory access mode. By contrast, the variable handle object would include methods capable of accessing the memory location that stores the field abstractly, without being limited to any implied memory access mode. Memory fencing operations and memory access modes are described in greater detail subsequently.

The method further comprises identifying a second instruction that calls one of the methods of the variable handle object. Examples of such a second instruction are described herein, such as "get", "setVolatile," and so forth. The second instruction references an instance of the data structure type, or an instance of an object that comprises the data structure type. For instance, the second instruction may be any suitable combination of a containing object, an array index, or a field itself. The second structure optionally comprising one or more parameters for a corresponding atomic operation to be performed, such as an array index for the memory location to read/write, a value to write to the memory location, and so forth. In an embodiment, the first instruction and the second instruction may be part of a same instruction, or may be separate instructions.

The method further comprises identifying a memory location indicated by the referenced instance. For instance, various lookup mechanisms may be provided to locate a referenced field in memory, or to locate a starting location of a referenced object instance that comprises a field of the indicated structure type, and determine an offset of the field from that starting location. Optionally, a check may be performed to ensure that the field is of the same structure type as indicated when the variable handle object was created.

The method further comprises causing performance of the corresponding atomic operation with respect to the memory location. For instance, a language runtime may cause performance of the corresponding atomic operation by determining a specific low-level hardware instruction that implements the atomic operation, if available, and sending the instruction to the hardware. As another example, in the Java programming language, the language runtime may execute an "unsafe" method to directly access the memory location.

In an embodiment, the methods of the variable handle object include methods corresponding to one or more of: a relaxed-set, a relaxed-get, a volatile-get, a volatile-set, an acquire-get, a release-set, a compare-and-set, a get-and-set, an atomic addition, and/or an atomic subtraction.

In an embodiment, the memory location is an unmanaged memory location external to memory allocated to a language runtime that is executing the first instruction and the second instruction. In an embodiment, the memory location is a managed memory location, which might variously be a static field, instance field, array, array element, or other kind of memory-based variable.

In an embodiment, a class type that defines an interface for accessing the methods and logic for implementing the methods may be provided. A single class type may be provided for all variable handle objects, regardless of the types of data structures to which they provide access. Or, different class types may be provided for static and/or instance files, arrays, arrays elements, numeric primitives, and/or other types of variables.

In an embodiment, one or more of the methods of the variable handle object are defined to have a polymorphic signature, as described in other sections. In an embodiment, one or more of the methods of the variable handle object are defined to have a generic signature, and the method further comprises reifying the generic signature at the call sites for some or all of the methods of the variable handle object in, for instance, compiled Java bytecode.

In an embodiment, the method further comprises identifying multiple instructions that call different methods of the variable handle object with reference to potentially different object or data structure instances, and, responsive to the multiple instructions, causing performance of different atomic operations with respect to the same memory location, and/or with respect to different memory locations, depending on the referenced instances.

In an embodiment, the method further comprises determining the atomic operations supported by the variable handle object based in part upon the one or more checks. For instance, if a data structure type has been declared as "final," no set operations would be supported, and any operations that could, even potentially, update memory would throw an exception.

In other aspects, systems of computing devices and computer-readable media are disclosed for implementing the techniques described herein.

### The invokedynamic Instruction

The invokedynamic instruction simplifies and potentially improves implementations of compilers and runtime systems for dynamic languages on the JVM. The invokedynamic instruction does this by allowing the language implementer to define custom linkage behavior. This contrasts with other JVM instructions such as invokevirtual, in which linkage behavior specific to Java classes and interfaces is hard-wired by the JVM.

Each instance of an invokedynamic instruction is called a *dynamic call site.* A dynamic call site is originally in an unlinked state, which means that there is no method specified for the call site to invoke. As previously mentioned, a dynamic call site is linked to a method by means of a bootstrap method. A dynamic call site's bootstrap method is a method specified by the compiler for the dynamically-typed language that is called once by the JVM to link the site. The object returned from the bootstrap method permanently determines the call site's behavior.

The invokedynamic instruction contains a constant pool index (in the same format as for the other invoke instructions). This constant pool index references a CONSTANT_InvokeDynamicentry. This entry specifies the bootstrap method (a CONSTANT_MethodHandle entry), the name of the dynamically linked method, and the argument types and return type of the call to the dynamically linked method.

The following is an example of an invokedynamic instruction. In this example, the runtime system links the dynamic call site specified by this invokedynamic instruction (which is +, the addition operator) to the IntegerOps.adder method by using the bootstrap method Example.mybsm. The methods adder and mybsm are defined above:

```
              invokedynamic InvokeDynamic
                 REF_invokeStatic:
                   Example.mybsm:
                      " (Ljava/lang/invoke/MethodHandles/Lookup;
                        Ljava/lang/String;
                        Ljava/lang/invoke/MethodType;)
                     Ljava/lang/invoke/CallSite;":
                   +:
                      " (Ljava/lang/Integer;
                        Ljava/lang/Integer;)
                     Ljava/lang/Integer;";
```

**Note:** The bytecode examples in these sections use the syntax of the ASM Java bytecode manipulation and analysis framework.

Invoking a dynamically linked method with the invokedynamic instruction involves the following steps:

### 1. Defining the Bootstrap Method

At runtime, when the JVM first encounters an invokedynamic instruction, it calls the bootstrap method. This method links the name specified by the invokedynamic instruction with the code that should be executed (the target method), which is referenced by a method handle. If the JVM executes the same invokedynamic instruction again, it does not call the bootstrap method; it automatically calls the linked method handle.

The bootstrap method's return type may be java.lang.invoke.CallSite. A CallSite object represents the linked state of an invokedynamic instruction and the method handle to which it is linked.

The bootstrap method takes three or more parameters: a MethodHandles.Lookup object, which is a factory for creating method handles in the context of the invokedynamic instruction; a String object, the method name mentioned in the dynamic call site; and a MethodType object, the resolved type signature of the dynamic call site.

Optionally, one or more additional static arguments to the invokedynamic instruction. These arguments, drawn from the constant pool, are intended to help language implementers safely and compactly encode additional metadata useful to the bootstrap method. In principle, the name and extra arguments are redundant since each call site may be given its own unique bootstrap method. However, such a practice may produce large class files and constant pools. See the above for an example of a bootstrap method.

### 2. Specifying Constant Pool Entries

As mentioned previously, the invokedynamic instruction contains a reference to an entry in the constant pool with the tag CONSTANT_InvokeDynamic. This entry contains references to other entries in the constant pool and references to attributes. This section briefly describes constant pool entries used by the invokedynamic instruction. For more information, see the java.lang.invoke package documentation and *The Java Virtual Machine Specification.*

### Example Constant Pool

The following is an excerpt from the constant pool for the class Example, which contains the bootstrap method Example.mybsm that links the method + with the Java method adder:

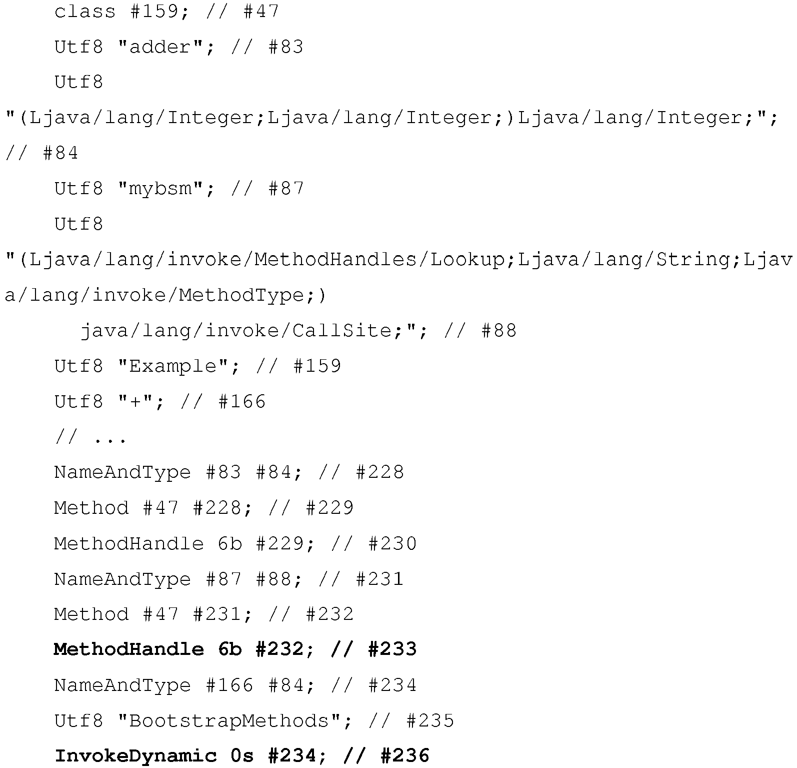

The constant pool entry for the invokedynamic instruction in this example contains three values:

```
              CONSTANT_InvokeDynamic tag
              Unsigned short of value 0
              Constant pool index #234.
```

The value 0 refers to the first bootstrap method specifier in the array of specifiers stored in the BootstrapMethods attribute. Bootstrap method specifiers are not in the constant pool table; they are contained in this separate array of specifiers. Each bootstrap method specifier contains an index to a CONSTANT_MethodHandle constant pool entry, which is the bootstrap method itself.

The following is an excerpt from the same constant pool that shows the BootstrapMethods attribute, which contains the array of bootstrap method specifiers:

```
                 [3] { // Attributes
                   // ...
                   Attr(#235, 6) { // BootstrapMethods at 0x0F63
                      [1] { // bootstrap_methods
                        { // bootstrap_method
                          #233; // bootstrap_method_ref
                           [0] { // bootstrap_arguments
                          } // bootstrap_arguments
                        } // bootstrap_method
                      }
                   } // end BootstrapMethods
                 } // Attributes
```

The constant pool entry for the bootstrap method mybsm method handle contains three values:

```
              CONSTANT_MethodHandle tag
              Unsigned byte of value 6
              Constant pool index #232.
```

The value 6 is the subtag REF_invokeStatic.

### 3. Using the invokedynamic Instruction

The following bytecode uses the invokedynamic instruction to call the bootstrap method mybsm, which links the dynamic call site (+, the addition operator) to the method adder. This example uses the + method to add the numbers 40 and 2 (line breaks have been inserted for clarity):

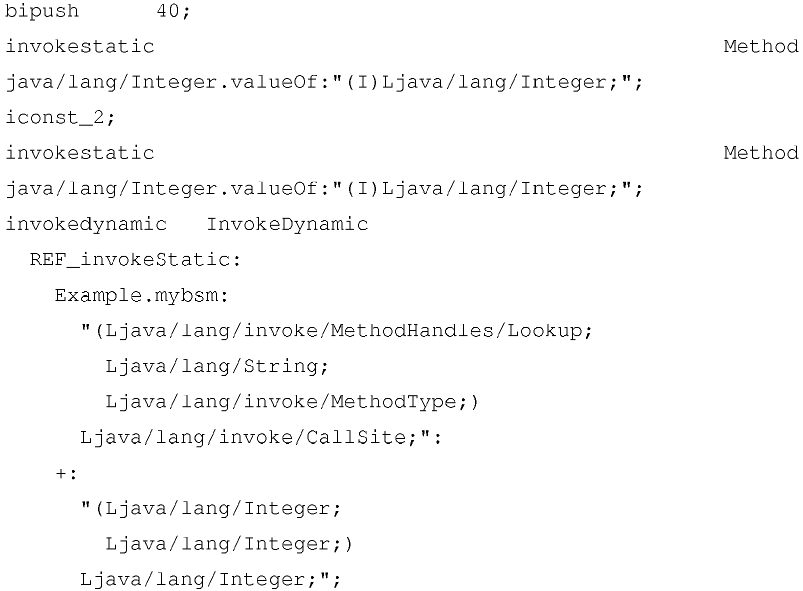

The first four instructions put the integers 40 and 2 on the stack and boxes them in the java.lang.Integer wrapper type. The fifth instruction invokes a dynamic method. This instruction refers to a constant pool entry with a CONSTANT_InvokeDynamic tag:

```
              REF_invokeStatic:
                 Example.mybsm:
                   " (Ljava/lang/invoke/MethodHandles/Lookup;
                     Ljava/lang/String;
                     Ljava/lang/invoke/MethodType;)
                   Ljava/lang/invoke/CallSite;":
                 +:
                   " (Ljava/lang/Integer;
                     Ljava/lang/Integer;)
                   Ljava/lang/Integer;";
```

Four bytes follow the CONSTANT_InvokeDynamic tag in this entry:
The first two bytes form a reference to a CONSTANT_MethodHandle entry that references a bootstrap method specifier:

```
              REF_invokeStatic:
                 Example.mybsm:
                   " (Ljava/lang/invoke/MethodHandles/Lookup;
                     Ljava/lang/String;
                     Ljava/lang/invoke/MethodType;)
                   Ljava/lang/invoke/CallSite;"
```

As mentioned previously, this reference to a bootstrap method specifier is not in the constant pool table; it is contained in a separate array defined by a class file attribute namedBootstrapMethods. The bootstrap method specifier contains an index to a CONSTANT_MethodHandle constant pool entry, which is the bootstrap method itself.

Three bytes follow this CONSTANT_MethodHandle constant pool entry: The first byte is the subtag REF_invokeStatic. This means that this bootstrap method will create a method handle for a static method; note that this bootstrap method is linking the dynamic call site with the static Java method adder. The next two bytes form a CONSTANT_Methodref entry that represents the method for which the method handle is to be created:

Example.mybsm:

```
                 " (Ljava/lang/invoke/MethodHandles/Lookup;
                   Ljava/lang/String;
                   Ljava/lang/invoke/MethodType;)
                 Ljava/lang/invoke/CallSite;"
```

In this example, the fully qualified name of the bootstrap method is Example.mybsm; the argument types are MethodHandles.Lookup, String, and MethodType; and the return type is CallSite.

The next two bytes form a reference to a CONSTANT_NameAndType entry:

```
              +:
                 " (Ljava/lang/Integer;
                   Ljava/lang/Integer;)
                 Ljava/lang/Integer;"
```

This constant pool entry specifies the method name (+), argument types (two Integer instances), and return type of the dynamic call site (Integer).

In this example, the dynamic call site is presented with boxed integer values, which exactly match the type of the eventual target, the adder method. In practice, the argument and return types do not need to exactly match. For example, the invokedynamic instruction may pass either or both of its operands on the JVM stack as primitive int values. Either or both operands may also be untyped Object values. The invokedynamic instruction may also receive its result as a primitive int value, or an untyped Object value. In any case, the dynMethodType argument to mybsm will accurately describe the method type required by the invokedynamic instruction.

Independently, the adder method may also have been given primitive or untyped arguments or return values. The bootstrap method is responsible for making up any difference between thedynMethodType and the type of the adder method. As shown in the code, this is easily done with an asType call on the target method.

### Deconstructing MethodHandles

This section deconstructs how exact invocation of MethodHandles are compiled, linked and executed using a specific example of setting the value of a non-static field. Examples of byte code and inlining traces are obtained by compiling and executing a MethodHandle-based jmh micro-benchmark.

Despite the name a Methodhandle can reference an underlying static or instance field of class. In the OpenJDK implementation invocations of such handles result in a corresponding call to an method on sun.misc.unsafe, after appropriate safety checks have been performed. For example, if the field is a reference type (a non-primitive type) marked as volatile then the method unsafe.putObjectVolatile will be invoked.

If such a reference to a MethodHandle is held in a static final field then the runtime should be able to constant fold invocations on that reference and what it holds when inlining occurs. In such cases, perhaps surprisingly, the generated machine code can be competitive with direct invocation of methods on unsafe or get/putfield byte codes instructions.

It is straightforward to extend the MethodHandle implementation to support handles for relaxed, lazy and compare-and-set atomic operations by invoking the appropriate method on Unsafe, putObject, putOrderedObject and compareAndSwapObject respectively.

A MethodHandle giving write access to a non-static field, "vfield" say of type value, on a class, Receiver say, can be obtained as follows:

```
              MethodHandles.Lookup lookup = ...
              MethodHandler setterOfValueOnReceiver =
                   lookup.findSetter(Receiver.class, "vfield", Value.class);
```

An exact invocation of that MethodHandle will then set the value of the field "vfield" on an instance of Receiver:

```
              Receiver r = ...
              Value v = ...
              setterOfValueOnReceiver.invokeExact(r, v);
```

Note that the receiver instance is passed as the first parameter to the invokeExact method. The receiver provides the base location from which to access the value of field, "vfield", it holds (since there is no direct 1-value and pass by reference of fields, or array elements, supported in Java a pair of receiver and value is necessary).

The method MethodHandle.invokeExact is declared as a polymorphic signature method:

```
              public final native @PolymorphicSignature Object
              invokeExact(Object... args) throws Throwable;
```

When javac compiles invocations to signature polymorphic methods it uses a symbolic type descriptor as the method signature, which is derived from actual parameter and return types of the caller and not the method signature of the method declaration.

An example of an invokevirtual instruction is shown as follows:

```
    13: invokevirtual #12 // Method
    java/lang/invoke/MethodHandle.invokeExact
    : (Lvarmh/VolatileSetAndGetTest$Receiver;Lvarmh/VolatileSetAndGetTest$Val
   ue;)V
```

Notice that the method signature accepts two arguments, a instance of a class Receiver and class value, and returns void, this signature is referred to as the symbolic type descriptor.

An inlining trace of such an invocation, when the handle is constant folded, is as follows:

```
       @ 13 java.lang.invoke.LambdaForm$MH/363164801::invokeExact_MT (15
       bytes) inline (hot)
          @ 2 java.lang.invoke.Invokers::checkExactType (30 bytes) inline
       (hot)
            @ 11 java.lang.invoke.MethodHandle::type (5 bytes) accessor
          @ 11
       java.lang.invoke.LambdaForm$MH/717088119: :putObjectVolatileFieldCast
       (32 bytes) inline (hot)
            @ 1 java.lang.invoke.DirectMethodHandle::fieldOffset (9 bytes)
       inline (hot)
            @ 6 java.lang.invoke.DirectMethodHandle::checkBase (7 bytes)
       inline (hot)
              @ 1 java.lang.Object::getClass (0 bytes) (intrinsic)
            @ 13 java.lang.invoke.DirectMethodHandle::checkCast (9 bytes)
       inline (hot)
              @ 5 java.lang.invoke.DirectMethodHandle$Accessor::checkCast
       (9 bytes) inline (hot)
                 @ 5 java.lang.Class::cast (27 bytes) inline (hot)
                   @ 6 java.lang.Class::isInstance (0 bytes) (intrinsic)
            @ 28 sun.misc.Unsafe::putObjectVolatile (0 bytes) (intrinsic)
```

The invocation is comprised of two stages. The first stage performs an efficient run-time safety check to determine if the symbolic type descriptor encoded at the call site exactly matches the method type descriptor of the MethodHandle. The second stage performs the write access, in this case to a volatile field.

The MethodHandler.invokeExact invocation is intrinsically linked (see section "Linking of invokeExact invocations") to the static methodinvokeExact_MT, on a dynamically generated class, the byte code of which is:

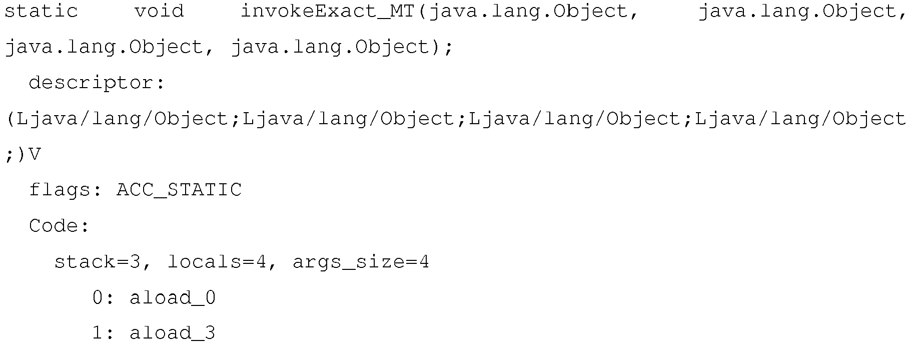

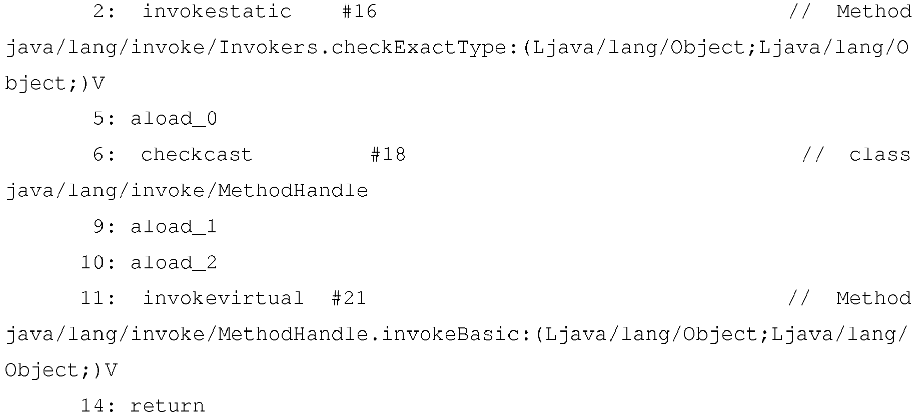

The parameters for invokeExact_MT are as follows:
the MethodHandle instance, setterOfValueOnReceiver; the parameters (r, v) passed to the invokeExact method; and finally the call site's symbolic type descriptor, appended when the call site is linked.

Notice that at this point the reference parameter types are erased to Object, thus the class declaring this static method can be shared for invocations with different method type descriptors that erase to the same signature.

This method first performs the method type descriptor check and if that fails an exception is thrown, otherwise it is safe to proceed as it is known the parameter types and return type of the call site are correct and exactly match. Next, the invokeBasic on the MethodHandle instance is invoked with the same parameters passed to the invokeExact method.

The invocation of invokeBasic is intrinsically linked to the static
method putObjectVolatileFieldCast on a dynamically generated class corresponding to the compiled lambda form of the MethodHandle. The vmentry field of the LambdaForm of the MethodHandle is theMemberName that characterizes the
method putObjectVolatileFieldCast, the byte code of which is:

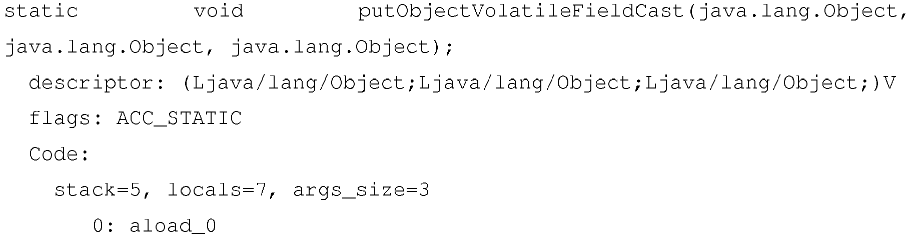

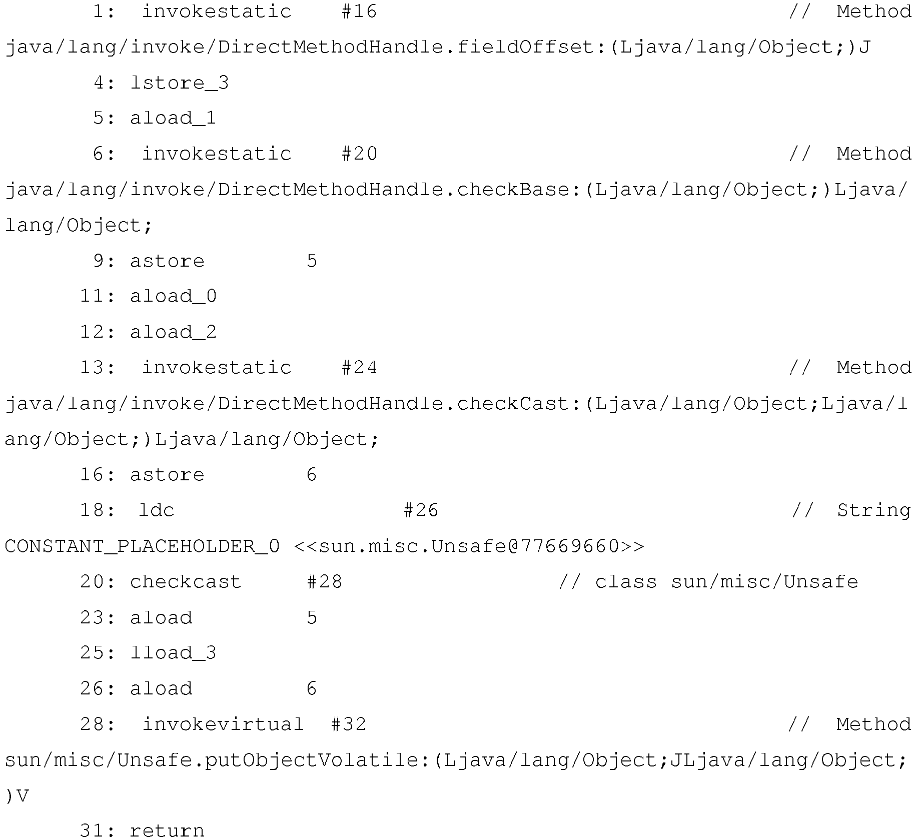

The first parameter is the MethodHandle instance and the subsequent parameters are those, (r, v), passed to the invokeExact method. The MethodHandle instance is a direct handle that holds the field offset to be used with the invocation
of unsafe.putObjectVolatile at the end of this method. Before that invocation: a safety check is performed to ensure the receiver instance is not null; and a cast check of the value instance to an instance of the value (field) type is performed to ensure the runtime compiler has sufficient information to perform type profiling. Note that this is not required for type safety since such a safety check was already performed by theinvokeExact_MT method; observe that the type of the receiver instance does not require a cast to an instance of the receiver type.

### Linking of invokeExact invocations

Invocations of MethodHandler. invokeExact are intrinsically linked via an up call from the VM to a Java method that returns a MemberNamecharacterizing the Java method to be linked to. This up-called Java method, statically known to the VM, is MethodHandleNatives.linkMethod:
static MemberName linkMethod(Class<?> callerClass, int refKind,
Class<?> defc, String name, Object type, Object[] appendixResult)

The "type" parameter is either an instance
of MethodType or string corresponding to the symbolic type descriptor. The "appendixResult" is used to return an optional extra parameter that must match the last parameter of the method characterized by theMemberName, and will be permanently appended at the linked call site.

On invocation of invokeExact the VM stack already contains three values and the VM will add one additional parameter onto the call stack such that the parameters are as follows: the MethodHandle instance, setterOfValueOnReceiver; the parameters (r, v) ; and finally the additional parameter that is the first element of the "appendixResult", which is the call site's symbolic type descriptor.

### MethodHandle Class

### public abstract class MethodHandle

### extends Object

A method handle is a typed, directly executable reference to an underlying method, constructor, field, or similar low-level operation, with optional transformations of arguments or return values. These transformations are quite general, and include such patterns as conversion, insertion, deletion, and substitution.

### Method handle contents

Method handles are dynamically and strongly typed according to their parameter and return types. They are not distinguished by the name or the defining class of their underlying methods. A method handle must be invoked using a symbolic type descriptor which matches the method handle's own type descriptor.

Every method handle reports its type descriptor via the type accessor. This type descriptor is a MethodType object, whose structure is a series of classes, one of which is the return type of the method (or void. class if none).

A method handle's type controls the types of invocations it accepts, and the kinds of transformations that apply to it. A method handle contains a pair of special invoker methods called invokeExact and invoke. Both invoker methods provide direct access to the method handle's underlying method, constructor, field, or other operation, as modified by transformations of arguments and return values. Both invokers accept calls which exactly match the method handle's own type. The plain, inexact invoker also accepts a range of other call types.

Method handles are immutable and have no visible state. Of course, they can be bound to underlying methods or data which exhibit state. With respect to the Java Memory Model, any method handle will behave as if all of its (internal) fields are final variables. This means that any method handle made visible to the application will always be fully formed. This is true even if the method handle is published through a shared variable in a data race.

Method handles cannot be subclassed by the user. Implementations may (or may not) create internal subclasses of MethodHandle which may be visible via the Object.getClass operation. The programmer should not draw conclusions about a method handle from its specific class, as the method handle class hierarchy (if any) may change from time to time or across implementations from different vendors.

### Method handle compilation

A Java method call expression naming invokeExact or invoke can invoke a method handle from Java source code. From the viewpoint of source code, these methods can take any arguments and their result can be cast to any return type. Formally this is accomplished by giving the invoker methods Object return types and variable arity Object arguments, but they have an additional quality called *signature polymorphism* which connects this freedom of invocation directly to the JVM execution stack.

As is usual with virtual methods, source-level calls to invokeExact and invoke compile to an invokevirtual instruction. More unusually, the compiler must record the actual argument types, and may not perform method invocation conversions on the arguments. Instead, it must push them on the stack according to their own unconverted types. The method handle object itself is pushed on the stack before the arguments. The compiler then calls the method handle with a symbolic type descriptor which describes the argument and return types.

To issue a complete symbolic type descriptor, the compiler must also determine the return type. This is based on a cast on the method invocation expression, if there is one, or elseObject if the invocation is an expression or else void if the invocation is a statement. The cast may be to a primitive type (but not void).

As a corner case, an uncasted null argument is given a symbolic type descriptor of java.lang.Void. The ambiguity with the type Void is harmless, since there are no references of type Void except the null reference.

### Method handle invocation

The first time a invokevirtual instruction is executed it is linked, by symbolically resolving the names in the instruction and verifying that the method call is statically legal. This is true of calls to invokeExact and invoke. In this case, the symbolic type descriptor emitted by the compiler is checked for correct syntax and names it contains are resolved. Thus, an invokevirtual instruction which invokes a method handle will always link, as long as the symbolic type descriptor is syntactically well-formed and the types exist.

When the invokevirtual is executed after linking, the receiving method handle's type is first checked by the JVM to ensure that it matches the symbolic type descriptor. If the type match fails, it means that the method which the caller is invoking is not present on the individual method handle being invoked.

In the case of invokeExact, the type descriptor of the invocation (after resolving symbolic type names) must exactly match the method type of the receiving method handle. In the case of plain, inexact invoke, the resolved type descriptor must be a valid argument to the receiver's asType method. Thus, plain invoke is more permissive than invokeExact. After type matching, a call to invokeExact directly and immediately invoke the method handle's underlying method (or other behavior, as the case may be).

A call to plain invoke works the same as a call to invokeExact, if the symbolic type descriptor specified by the caller exactly matches the method handle's own type. If there is a type mismatch, invoke attempts to adjust the type of the receiving method handle, as if by a call to asType, to obtain an exactly invokable method handle M2. This allows a more powerful negotiation of method type between caller and callee. (*Note:* The adjusted method handle M2 is not directly observable, and implementations are therefore not required to materialize it.)

### Invocation checking

In typical programs, method handle type matching will usually succeed. But if a match fails, the JVM will throw a WrongMethodTypeException, either directly (in the case ofinvokeExact) or indirectly as if by a failed call to asType (in the case of invoke).

Thus, a method type mismatch which might show up as a linkage error in a statically typed program can show up as a dynamic WrongMethodTypeException in a program which uses method handles.

Because method types contain "live" Class objects, method type matching takes into account both types names and class loaders. Thus, even if a method handle M is created in one class loader L1 and used in another L2, method handle calls are type-safe, because the caller's symbolic type descriptor, as resolved in L2, is matched against the original callee method's symbolic type descriptor, as resolved in L1. The resolution in L1 happens when M is created and its type is assigned, while the resolution in L2 happens when theinvokevirtual instruction is linked.

Apart from the checking of type descriptors, a method handle's capability to call its underlying method is unrestricted. If a method handle is formed on a non-public method by a class that has access to that method, the resulting handle can be used in any place by any caller who receives a reference to it.

Unlike with the Core Reflection API, where access is checked every time a reflective method is invoked, method handle access checking is performed when the method handle is created. In the case of ldc (see below), access checking is performed as part of linking the constant pool entry underlying the constant method handle.

Thus, handles to non-public methods, or to methods in non-public classes, should generally be kept secret. They should not be passed to untrusted code unless their use from the untrusted code would be harmless.

### Method handle creation

Java code can create a method handle that directly accesses any method, constructor, or field that is accessible to that code. This is done via a reflective, capability-based API calledMethodHandles.Lookup For example, a static method handle can be obtained from Lookup.findStatic. There are also conversion methods from Core Reflection API objects, such asLookup.unreflect.

Like classes and strings, method handles that correspond to accessible fields, methods, and constructors can also be represented directly in a class file's constant pool as constants to be loaded by ldc bytecodes. A new type of constant pool entry, CONSTANT_MethodHandle, refers directly to an associated CONSTANT_Methodref, CONSTANT_InterfaceMethodref, orCONSTANT_Fieldref constant pool entry. (For full details on method handle constants, see sections 4.4.8 and 5.4.3.5 of the Java Virtual Machine Specification.)

Method handles produced by lookups or constant loads from methods or constructors with the variable arity modifier bit (0x0080) have a corresponding variable arity, as if they were defined with the help of asVarargsCollector.

A method reference may refer either to a static or non-static method. In the non-static case, the method handle type includes an explicit receiver argument, prepended before any other arguments. In the method handle's type, the initial receiver argument is typed according to the class under which the method was initially requested. (E.g., if a non-static method handle is obtained via ldc, the type of the receiver is the class named in the constant pool entry.)

Method handle constants are subject to the same link-time access checks their corresponding bytecode instructions, and the ldc instruction will throw corresponding linkage errors if the bytecode behaviors would throw such errors.

As a corollary of this, access to protected members is restricted to receivers only of the accessing class, or one of its subclasses, and the accessing class must in turn be a subclass (or package sibling) of the protected member's defining class. If a method reference refers to a protected non-static method or field of a class outside the current package, the receiver argument will be narrowed to the type of the accessing class.

When a method handle to a virtual method is invoked, the method is always looked up in the receiver (that is, the first argument).

A non-virtual method handle to a specific virtual method implementation can also be created. These do not perform virtual lookup based on receiver type. Such a method handle simulates the effect of an invokespecial instruction to the same method.

### Usage examples

Here are some examples of usage:

```
              Object x, y; String s; int i;
              MethodType mt; MethodHandle mh;
              MethodHandles.Lookup lookup = MethodHandles.lookup();
              // mt is (char,char)String
              mt = MethodType.methodType(String.class, char.class,
              char.class);
              mh = lookup.findVirtual(String.class, "replace", mt);
              s = (String) mh.invokeExact("daddy",'d','n');
              // invokeExact(Ljava/lang/String;CC)Ljava/lang/String;
              assertEquals(s, "nanny");
              // weakly typed invocation (using MHs.invoke)
              s = (String) mh.invokeWithArguments("sappy", 'p', 'v');
              assertEquals(s, "savvy");
              // mt is (Object[])List
              mt = MethodType.methodType(java.util.List.class,
              Object[].class);
              mh = lookup.findStatic(java.util.Arrays.class, "asList", mt);
              assert(mh.isVarargsCollector());
              x = mh.invoke("one", "two");
              //
              invoke(Ljava/lang/String;Ljava/lang/String;)Ljava/lang/Object;
              assertEquals(x, java.util.Arrays.asList("one","two"));
              // mt is (Object,Object,Object)Object
              mt = MethodType.genericMethodType(3);
              mh = mh.asType(mt);
              x = mh.invokeExact((Object)1, (Object)2, (Object)3);
              //
              invokeExact(Ljava/lang/Object;Ljava/lang/Object;Ljava/lang/Obje
              ct;)Ljava/lang/Object;
              assertEquals(x, java.util.Arrays.asList(1,2,3));
              // mt is ()int
              mt = MethodType.methodType(int.class);
              mh = lookup.findVirtual(java.util.List.class, "size", mt);
              i = (int) mh.invokeExact(java.util.Arrays.asList(1,2,3));
              // invokeExact(Ljava/util/List;)I
              assert(i == 3);
              mt = MethodType.methodType(void.class, String.class);
              mh = lookup.findVirtual(java.io.PrintStream.class, "println",
              mt) ;
              mh.invokeExact(System.out, "Hello, world.");
              // invokeExact(Ljava/io/PrintStream;Ljava/lang/String;)V
```

Each of the above calls to invokeExact or plain invoke generates a single invokevirtual instruction with the symbolic type descriptor indicated in the following comment. In these examples, the helper method assertequals is assumed to be a method which calls Objects.equal s on its arguments, and asserts that the result is true.

### Exceptions

The methods invokeExact and invoke are declared to throw Throwable, which is to say that there is no static restriction on what a method handle can throw. Since the JVM does not distinguish between checked and unchecked exceptions (other than by their class, of course), there is no particular effect on bytecode shape from ascribing checked exceptions to method handle invocations. But in Java source code, methods which perform method handle calls must either explicitly throw Throwable, or else must catch all throwables locally, rethrowing only those which are legal in the context, and wrapping ones which are illegal.

### Signature polymorphism

The unusual compilation and linkage behavior of invokeExact and plain invoke is referenced by the term *signature polymorphism.* As defined in the Java Language Specification, a signature polymorphic method is one which can operate with any of a wide range of call signatures and return types.

In source code, a call to a signature polymorphic method will compile, regardless of the requested symbolic type descriptor. As usual, the Java compiler emits an invokevirtualinstruction with the given symbolic type descriptor against the named method. The unusual part is that the symbolic type descriptor is derived from the actual argument and return types, not from the method declaration.

When the JVM processes bytecode containing signature polymorphic calls, it will successfully link any such call, regardless of its symbolic type descriptor. (In order to retain type safety, the JVM will guard such calls with suitable dynamic type checks, as described elsewhere.)

Bytecode generators, including the compiler back end, are required to emit untransformed symbolic type descriptors for these methods. Tools which determine symbolic linkage are required to accept such untransformed descriptors, without reporting linkage errors.

### Interoperation between method handles and the Core Reflection API

Using factory methods in the Lookup API, any class member represented by a Core Reflection API object can be converted to a behaviorally equivalent method handle. For example, a reflective Method can be converted to a method handle
using Lookup.unreflect. The resulting method handles generally provide more direct and efficient access to the underlying class members.

As a special case, when the Core Reflection API is used to view the signature polymorphic methods invokeExact or plain invoke in this class, they appear as ordinary non-polymorphic methods. Their reflective appearance, as viewed by Class.getDeclaredMethod, is unaffected by their special status in this API. For example, Method.getModifiers will report exactly those modifier bits required for any similarly declared method, including in this case native and varargs bits.

As with any reflected method, these methods (when reflected) may be invoked via java.lang.reflect.Method.invoke. However, such reflective calls do not result in method handle invocations. Such a call, if passed the required argument (a single one, of type Object [ ]), will ignore the argument and will throw
an UnsupportedOperationException.

Since invokevirtual instructions can natively invoke method handles under any symbolic type descriptor, this reflective view conflicts with the normal presentation of these methods via bytecodes. Thus, these two native methods, when reflectively viewed by Class.getDeclaredMethod, may be regarded as placeholders only.

In order to obtain an invoker method for a particular type descriptor,
use MethodHandles.exactInvoker, or MethodHandles.invoker.
The Lookup.findVirtual API is also able to return a method handle to call invokeExact or plain invoke, for any specified type descriptor .

### Interoperation between method handles and Java generics

A method handle can be obtained on a method, constructor, or field which is declared with Java generic types. As with the Core Reflection API, the type of the method handle will constructed from the erasure of the source-level type. When a method handle is invoked, the types of its arguments or the return value cast type may be generic types or type instances. If this occurs, the compiler will replace those types by their erasures when it constructs the symbolic type descriptor for the invokevirtual instruction.

Method handles do not represent their function-like types in terms of Java parameterized (generic) types, because there are three mismatches between function-like types and parameterized Java types.

Method types range over all possible arities, from no arguments to up to the maximum number of allowed arguments. Generics are not variadic, and so cannot represent this.

Method types can specify arguments of primitive types, which Java generic types cannot range over.

Higher order functions over method handles (combinators) are often generic across a wide range of function types, including those of multiple arities. It is impossible to represent such genericity with a Java type parameter.

### Lookup Factory Methods

The factory methods on a Lookup object correspond to all major use cases for methods, constructors, and fields. Each method handle created by a factory method is the functional equivalent of a particular *bytecode behavior.* (Bytecode behaviors are described in section 5.4.3.5 of the Java Virtual Machine Specification.) Here is a summary of the correspondence between these factory methods and the behavior the resulting method handles:

| **lookup expression** | **member** | **bytecode behavior** |
|---|---|---|
| :lookup.findGetter(C.class,"f",FT.c lass) | FT f; | (T) this.f; |
| lookup.findStaticGetter(C.class,"f ",FT.class) | static FT f; | (T) C.f; |
| lookup.findSetter(C.class,"f",FT.c lass) | FT f; | this.f = x; |
| lookup.findStaticSetter(C.class,"f ",FT.class) | static FT f; | C.f = arg; |
| lookup.findVirtual(C.class,"m",MT) | T m(A*) ; | (T) this.m(arg*); |
| lookup.findStatic(C.class,"m",MT) | static T m(A*) ; | (T) C.m(arg*); |
| lookup.findSpecial(C.class,"m",MT, this.class) | T m(A*) ; | (T) super.m(arg*); |
| lookup.findConstructor(C.class,MT) | C(A*); | new C(arg*); |
| lookup.unreflectGetter(aField) | (stati | (FT) |
| | c)? FT f; | aField.get(thisOrNull) ; |
| lookup.unreflectSetter(aField) | (stati c)? FT f; | aField.set (thisOrNull, arg) ; |
| lookup.unreflect(aMethod) | (stati c)? T m(A*) ; | (T) aMethod.invoke(thisOrNul 1, arg*); |
| lookup.unreflectConstructor(aConst ructor) | C(A*); | (C) aConstructor.newInstance (arg*); |
| lookup.unreflect(aMethod) | (stati c)? T m(A*); | (T) aMethod.invoke(thisOrNul 1, arg*); |

Here, the type C is the class or interface being searched for a member, documented as a parameter named refc in the lookup methods. The method type MT is composed from the return type T and the sequence of argument types A*. The constructor also has a sequence of argument types A* and is deemed to return the newly-created object of type C. Both MT and the field type FT are documented as a parameter named type. The formal parameter this stands for the self-reference of type C; if it is present, it is always the leading argument to the method handle invocation. (In the case of some protected members, this may be restricted in type to the lookup class; see below.) The name arg stands for all the other method handle arguments. In the code examples for the Core Reflection API, the name thisOrNull stands for a null reference if the accessed method or field is static, and this otherwise. The names aMethod, aField, and aConstructor stand for reflective objects corresponding to the given members.

In cases where the given member is of variable arity (i.e., a method or constructor) the returned method handle will also be of variable arity. In all other cases, the returned method handle will be of fixed arity.

*Discussion:* The equivalence between looked-up method handles and underlying class members and bytecode behaviors can break down in a few ways. If C is not symbolically accessible from the lookup class's loader, the lookup can still succeed, even when there is no equivalent Java expression or bytecoded constant. Likewise, if T or MT is not symbolically accessible from the lookup class's loader, the lookup can still succeed. For example, lookups for MethodHandle.invokeExact and MethodHandle.invokewill always succeed, regardless of requested type. If there is a security manager installed, it can forbid the lookup on various grounds (see below). By contrast, the ldc instruction on CONSTANT_MethodHandle constant is not subject to security manager checks. If the looked-up method has a very large arity, the method handle creation may fail, due to the method handle type having too many parameters.

### Access checking

Access checks are applied in the factory methods of Lookup, when a method handle is created. This is a key difference from the Core Reflection API,
sincejava.lang.reflect.Method.invoke performs access checking against every caller, on every call.

All access checks start from a Lookup object, which compares its recorded lookup class against all requests to create method handles. A single Lookup object can be used to create any number of access-checked method handles, all checked against a single lookup class.

A Lookup object can be shared with other trusted code, such as a metaobject protocol. A shared Lookup object delegates the capability to create method handles on private members of the lookup class. Even if privileged code uses the Lookup object, the access checking is confined to the privileges of the original lookup class.

A lookup can fail, because the containing class is not accessible to the lookup class, or because the desired class member is missing, or because the desired class member is not accessible to the lookup class, or because the lookup object is not trusted enough to access the member. In any of these cases, a ReflectiveOperationException will be thrown from the attempted lookup. The exact class will be one of the following: NoSuchMethodException - if a method is requested but does not exist; NoSuchFieldException - if a field is requested but does not exist; IllegalAccessException - if the member exists but an access check fails.

In general, the conditions under which a method handle may be looked up for a method M are no more restrictive than the conditions under which the lookup class could have compiled, verified, and resolved a call to M. Where the JVM would raise exceptions like NoSuchMethodError, a method handle lookup will generally raise a corresponding checked exception, such as NoSuchMethodException. And the effect of invoking the method handle resulting from the lookup is exactly equivalent to executing the compiled, verified, and resolved call to M. The same point is true of fields and constructors.

*Discussion:* Access checks only apply to named and reflected methods, constructors, and fields. Other method handle creation methods, such as MethodHandle.asType, do not require any access checks, and are used independently of any Lookup object.

If the desired member is protected, the usual JVM rules apply, including the requirement that the lookup class must be either be in the same package as the desired member, or must inherit that member. (See the Java Virtual Machine Specification, sections 4.9.2, 5.4.3.5, and 6.4.) In addition, if the desired member is a non-static field or method in a different package, the resulting method handle may only be applied to objects of the lookup class or one of its subclasses. This requirement is enforced by narrowing the type of the leadingthis parameter from C (which will necessarily be a superclass of the lookup class) to the lookup class itself.

The JVM imposes a similar requirement on invokespecial instruction, that the receiver argument must match both the resolved method *and* the current class. Again, this requirement is enforced by narrowing the type of the leading parameter to the resulting method handle. (See the Java Virtual Machine Specification, section 4.10.1.9.)

The JVM represents constructors and static initializer blocks as internal methods with special names ("<init>" and " <clinit>"). The internal syntax of invocation instructions allows them to refer to such internal methods as if they were normal methods, but the JVM bytecode verifier rejects them. A lookup of such an internal method will produce aNoSuchMethodException.

In some cases, access between nested classes is obtained by the Java compiler by creating an wrapper method to access a private method of another class in the same top-level declaration. For example, a nested class C . D can access private members within other related classes such as C, C. D. E, or C. B, but the Java compiler may need to generate wrapper methods in those related classes. In such cases, a Lookup object on C. E would be unable to those private members. A workaround for this limitation is the Lookup.in method, which can transform a lookup on C . E into one on any of those other classes, without special elevation of privilege.

The accesses permitted to a given lookup object may be limited, according to its set of lookupModes, to a subset of members normally accessible to the lookup class. For example, the publicLookup method produces a lookup object which is only allowed to access public members in public classes. The caller sensitive method lookup produces a lookup object with full capabilities relative to its caller class, to emulate all supported bytecode behaviors. Also, the Lookup.in method may produce a lookup object with fewer access modes than the original lookup object.

*Discussion of private access:* We say that a lookup has *private access* if its lookup modes include the possibility of accessing private members. As documented in the relevant methods elsewhere, only lookups with private access possess the following capabilities:
access private fields, methods, and constructors of the lookup class
create method handles which invoke caller sensitive methods, such as Class.forName
create method handles which emulate invokespecial instructions
avoid package access checks for classes accessible to the lookup class
create delegated lookup objects which have private access to other classes within the same package member

Each of these permissions is a consequence of the fact that a lookup object with private access can be securely traced back to an originating class, whose bytecode behaviors and Java language access permissions can be reliably determined and emulated by method handles.

### Security manager interactions

Although bytecode instructions can only refer to classes in a related class loader, this API can search for methods in any class, as long as a reference to its Class object is available. Such cross-loader references are also possible with the Core Reflection API, and are impossible to bytecode instructions such as invokestatic or getfield. There is a security manager API to allow applications to check such cross-loader references. These checks apply to both the MethodHandles . Lookup API and the Core Reflection API (as found on Class).

If a security manager is present, member lookups are subject to additional checks. From one to three calls are made to the security manager. Any of these calls can refuse access by throwing a SecurityException. Define smgr as the security manager, lookc as the lookup class of the current lookup object, refc as the containing class in which the member is being sought, and defc as the class in which the member is actually defined. The value lookc is defined as *not present* if the current lookup object does not have private access. The calls are made according to the following rules:
**Step 1**: If lookc is not present, or if its class loader is not the same as or an ancestor of the class loader of refc, then smgr. checkPackageAccess (refcPkg) is called, whererefcPkg is the package of refc.
**Step 2:** If the retrieved member is not public and lookc is not present, then smgr.checkPermission with RuntimePermission ("accessDeclaredMemb ers") is called.
**Step 3:** If the retrieved member is not public, and if lookc is not present, and if defc and refc are different, then smgr. checkPackageAccess (defcPkg) is called, where defcPkg is the package of defc.

Security checks are performed after other access checks have passed. Therefore, the above rules presuppose a member that is public, or else that is being accessed from a lookup class that has rights to access the member.

### Caller sensitive methods

A small number of Java methods have a special property called caller sensitivity. A *caller-sensitive* method can behave differently depending on the identity of its immediate caller.

If a method handle for a caller-sensitive method is requested, the general rules for bytecode behaviors apply, but they take account of the lookup class in a special way. The resulting method handle behaves as if it were called from an instruction contained in the lookup class, so that the caller-sensitive method detects the lookup class. (By contrast, the invoker of the method handle is disregarded.) Thus, in the case of caller-sensitive methods, different lookup classes may give rise to differently behaving method handles.

In cases where the lookup object is publicLookup (), or some other lookup object without private access, the lookup class is disregarded. In such cases, no caller-sensitive method handle can be created, access is forbidden, and the lookup fails with an IllegalAccessException.

*Discussion:* For example, the caller-sensitive method Class.forName (x) can return varying classes or throw varying exceptions, depending on the class loader of the class that calls it. A public lookup of Class.forName will fail, because there is no reasonable way to determine its bytecode behavior.

If an application caches method handles for broad sharing, it should use publicLookup() to create them. If there is a lookup of Class.forName, it will fail, and the application must take appropriate action in that case. It may be that a later lookup, perhaps during the invocation of a bootstrap method, can incorporate the specific identity of the caller, making the method accessible.

The function MethodHandles.lookup is caller sensitive so that there can be a secure foundation for lookups. Nearly all other methods in the JSR 292 API rely on lookup objects to check access requests.

### Method handles and invokedynamic

Abstractly, a method handle is simply a type and some behavior that conforms to that type. As befits an object-oriented system, the behavior may include data. Concretely, a method handle can refer to any JVM method, field, or constructor, or else it can be a transform of any previously specified method handle. Transforms include partial application (binding), filtering, and various forms of argument shuffling.

The method handle's type is expressed as a sequence of zero or more parameter types, and an optional return type (or the non-type void). Concretely, this is a MethodType reference, and can be extracted from any method handle using MethodHandle.type.

The behavior is what happens when the method handle is invoked, using the method MethodHandle.invokeExact. The special capability of method handles is that invokeExactaccepts any number of any type of arguments, and can return any type or void. A regular invokevirtual instruction performs this. (It is rewritten secretly to invokehandle, as discussed below, but this can be ignored except by HotSpot implementors.)

Uniquely to method handles, the invokevirtual instruction can specify any structurally valid type signature, and the call site will link. Technically, we say that invokeExact *issignature polymorphic.* Practically speaking, when linking such a call site, the JVM may be ready to deal with any type signature, which means it will have to generate adapters of various sorts. From the user's point of view, a method handle can wrap and/or invoke any method, of any type.

Concretely, the behavior of a method handle depends on a object called a LambdaForm, which is a low-level description of step-by-step operations. A method handle's lambda form is stored in its form field, just as its type is stored in its type field.

A method handle's lambda form may ignore the method handle completely and do something context-independent, like throw an exception or return zero. More generally, it can consult the method handle for information. For example, it can examine the method handle's return type and convert some value to that type before returning it.

More interestingly, if a method handle's class is a subclass which contains additional data fields, the lambda form can refer to those fields as it executes.

Since method handles express behavior more than state, their fields are typically immutable. But, method handles can easily be *bound* to arbitrary Java objects, producing closures.

### The "basic type" system

In order to implement signature polymorphism more simply, method handles internally operate in terms of *basic types.* A basic type is a JVM type in which many inconvenient distinctions have been "erased", so that the remaining distinctions (such as reference vs. primitive and int vs. long) can be attended to.

For starters, in the basic type system, all 32-bit types except float are erased to simple int. If a byte value is required somewhere, it may be masked down from a full int. Thus, there are only four primitive types to worry about.

Under basic typing rules, all reference types are represented by java.lang.Object. Thus, there are a total of five basic types, represented by their JVM signature characters: L, I, J, F, D. To these we add V for the non-type void.

In the bulk of Java code, the full type system is in force. In order to name reference types, a system of class loaders and type constraints may be consulted and honored. From perspective of the JSR 292 runtime, this type system is a complex mix of names and scopes. Inside the runtime, using basic types there are no names to worry about, except Object and other types on the boot class path.

If a reference of a narrower type is required somewhere, an explicit checkcast may be issued before the reference is used. In fact, the checkcast is in general a call to Class.cast, with the specialized type being a constant Class reference rather than a symbolic reference name.

Normally, all extra conversions (such as int to byte and Object to a named reference type) disappear in the optimizer, which keeps track of full type information from context.

### Lambda form basics

In brief, a lambda form is a classic lambda expression with zero or more formal parameters, plus zero or more body expressions. The types of parameters and expression values are drawn from the basic type system. Each expression is simply the application of a method handle to zero or more arguments. Each argument is either a constant value or a previously specified parameter or expression value.

When a lambda form is used as a method handle behavior, the first parameter (a0) is always the method handle itself. (But there are other uses for lambda forms.) When a method handle is invoked, after any initial type checking, the JVM executes the lambda form of the method handle to complete the method handle invocation. This leads to some bootstrapping challenges, since the lambda form executes by evaluating additional method handle invocations.

### Lambda form optimization

There is one more indirection in lambda form execution which allows the system to optimize itself: A lambda form has a field called vmentry which (at long last) provides a Method*pointer for the JVM to jump into, in order to evaluate the lambda form. (Note: Since Java cannot directly represent JVM metadata pointers, this vmentry is actually of type MemberName, which is a low-level wrapper for a Method*. So there is one more indirection after all, to hide the metadata.)

When a lambda form is first created, this vmentry pointer is initialized to a method called the lambda form interpreter, which can execute any lambda form. (Actually it has a thin wrapper which is specialized to the arity and basic types of the arguments.) The lambda form interpreter is very simple and slow. After it executes a given lambda form a few dozen times, the interpreter fetches or generates bytecode for the lambda form, which is customized (at least partially) to the lambda form body. In the steady state, all "hot" method handles and their "hot" lambda forms have bytecode generated, and eventually JIT-compiled.

Thus, in the steady state, a hot method handle is executed without the lambda form interpreter. The low-level JVM steps are as follows: 1. Fetch MethodHandle.form; 2. Fetch LambdaForm.vmentry; 3. Fetch MemberName.vmtarget, a hidden Method* pointer; 4. Fetch Method::from_compiled_entry; 5. Jump to optimized code. As noted elsewhere, if the method handle (or if the lambda form or the member name) is a compile-time constant, all the usual inlining can be done.

### Invokedynamic

As defined in the JVMS, invokedynamic comprises of a name, a method type signature, and bootstrap specifier. The caller-visible behavior of the instruction is defined only by the type signatures, which determines exactly which types of arguments and return values are shuffled through the stack. The actual behavior of the instruction is determined when the instruction is first executed. As with the other invoke instructions, the LinkResolver modules handles setup operations performed on first execution.

For invokedynamic, the bootstrap specifier is resolved into a method handle and zero or more extra constant arguments. (These are all drawn from the constant pool.) The name and signature are pushed on the stack, along with the extra arguments and a MethodHandles.Lookup parameter to reify the requesting class, and the bootstrap method handle is invoked. (This appeal to a user-specified method may seem startling, but to the JVM is it not much more complex than the ClassLoader operations which may be performed to locate a new class's bytecodes.)

When the bootstrap method returns, it presents a CallSite object to the JVM runtime. This call site contains a method handle, which (in the end) determines the exact behavior of the linked invokedynamic instruction. Since method handle can do just about anything, the invokedynamic instruction, after linking, is a fully general virtual machine instruction.

(The alert reader will wonder why the bootstrap method doesn't just return a method handle. The answer is that some call sites can, potentially, be bound over time to a succession of *different* method handles. This gives Java programmers the a low-level code-patching technique similar to that used by the JVM to manage monomorphic and polymorphic virtual call sites.)

### Invokedynamic implementation

Because each invokedynamic instruction links (in general) to a different call site, the constant pool cache may contain a separate entry for each invokedynamic instruction. (Other invoke instructions can share CP cache entries, if they use the same symbolic reference in the constant pool.) A CP cache entry ("CPCE"), when resolved, has one or two words of metadata and/or offset information.

For invokedynamic, a resolved CPCE contains a Method* pointer to a concrete *adapter* method providing the exact behavior of the call. There is also a reference parameter associated with the call site called the *appendix,* which is stored in the resolved_references array for the CPCE.

The method is called an adapter because (generally speaking) it shuffles arguments, extracts a target method handle from the call site, and invokes the method handle. The extra reference parameter is called the appendix because it is appended to the argument list when the invokedynamic instruction is executed. Typically the appendix is the CallSite reference produced by the bootstrap method, but the JVM does not care about this. As long as the adapter method in the CPCE knows what to do with the appendix stored with the CPCE, all is well.

As a corner case, if the appendix value is null, it is not pushed at all, and the adapter method may *not* expect the extra argument. The adapter method in this case may be a permanently linked reference to a static method with a signature consistent with the invokedynamic instruction. This would in effect turn the invokedynamic into a simpleinvokestatic. Many other such strength reduction optimizations are possible.

### Linkage handshake

The adapter Method* pointer for an invokedynamic CPCE is not chosen by the JVM, but rather by trusted Java code. The same is true of the appendix reference. In fact, the JVM does not directly invoke the bootstrap method. Instead, the JVM calls a HotSpot-specific method MethodHandleNatives.linkCallSite with the resolved bootstrap specifier information. (Other JVM implementations do not necessarily use this handshake.) The linkCallSite method performs the steps demanded by the JSR 292 bootstrap rules, and returns two coordinated values, the adapter method and its appendix.

Since Java cannot represent a raw Method* pointer, the method is wrapped in a private Java type called MemberName, akin to a Java mirror for a Klass*. The appendix is a simpleObject reference (or null). After a little unpacking, these are plugged into the CPCE.

### Adapter method for invokedynamic

In general, the adapter method is a specially generated method created on the fly by the JSR 292 runtime. It is generated from a lambda form which computes the current call site target and invokes that target. The lambda form takes leading parameters corresponding to the arguments stacked for the invokedynamic instruction, i.e., those required by the method signature of the instruction. The lambda form also takes a trailing appendix argument (if relevant). It then performs whatever actions required by the bootstrap method and its call site.

Here is an example of an adapter method, taken from an actual application:

```
 LambdaForm(a0:D,a1:L,a2:L)=>{
  t3:L=Invokers.getCallSiteTarget(a2:L);
 t4:L=MethodHandle.invokeBasic(t3:L,a0:D,a1:L);
 t4:L}
```

Here the invokedynamic instruction takes two arguments, a double a0 and a reference a1, and returns a reference t4. The appendix trails along at the end, in a2.

The body of the lambda form extracts a method handle target from the appendix using the subroutine Invokers.getCallSiteTarget. The method handle is bound to t3, and then immediately invoked on the two leading arguments, a0 and a1.

As may be seen by inspecting the Java code, getCallSiteTarget expects to get a non-null CallSite argument. If this were to fail, it would mean that the trusted Java code has a bug in it, since the trusted code is responsible for returning to the JVM a consistent pair of adapter and appendix.

The special non-public routine MethodHandle.invokeBasic is an unchecked version of MethodHandle.invokeExact. It differs in two ways from invokeExact. First, it does not check that its callee has a type which (exactly) matches the types at the call site. (For better or worse, it may not throw WrongMethodTypeException.)

Second, it allows loose typing of its arguments and return value, according to the *basic type* scheme used in the JSR 292 runtime. (See above.)

### Example execution sequence for invokedynamic

The target of the invokedynamic instruction's call site can be any method handle. In the simplest case it may be a direct method handle connecting the method containing the invokedynamic instruction to some other Java language method.

Here is an example of the sequence of events and stack frames that would make such a connection, from a method IndyUser.m1 to a target method LibraryCls.m2:

| (IndyUser.m1) | (LF adapter for indy) | (LF method for DMH) | (LibraryCls.m2) |
|---|---|---|---|
| 1.2D "3" > invokedynami c foo(DL)L | | | |
| 1.2D "3" > push CPC.appendix | | | |
| 1.2D "3" (CS) > jump to CPC.method | | | |
| ... | a0:1.2D a1:"3" a2:(CS) (CS) > invokestatic Invokers.getCallSiteTarg et | | |
| ... | a0:1.2D a1:"3" a2:(CS) t3: (CS.target) (CS.target) 1.2D "3" > invokevirtual MH.invokeBasic(DL) | | |
| ... | ... | a0:(CS.target) a1:1.2D a2:"3" (CS.target) > invokestatic DMH.internalMemberNam e | |
| ... | ... | a0:(CS.target) a1:1.2D a2:"3" t3:(MN) 1.2D "3" (MN) > invoke static MH.linkToStatic(DL+L)L | |
| ... | ... | 1.2D "3" (MN) > pop MN | |
| ... | ... | 1.2D "3" > jump to MN.method | |
| | ... | | 10:1.3D 11:"3" > code for LibraryCls.m2(DL) L |

There are two internal stack frames, one for the adapter bound to the invokedynamic call site, and one which handles invocations for the target method handle.

The special methods internalMemberName and linkToStatic are explained on the [page about direct method handles].

### Method handle invocation

Internally to HotSpot (in rewriter.cpp) method handle invocations are rewritten to use a special instruction called invokehandle. This instruction in many ways is parallel toinvokedynamic. It resolves to an adapter method pointer and an appendix. The appendix (if not null) is pushed after the explicit arguments to invoke or invokeExact.

The resolution is done via a call to trusted Java code, to a method called MethodHandleNatives.linkMethod. As with linkCallSite, the JVM passes all resolved constant pool references to linkMethod, and receives back a coordinated pair of values, a MemberName and an Object. After unpacking, these are plugged into the CPCE as the adapter and appendix.

The same degrees of freedom apply to invokehandle CPCE entries as apply to invokedynamic CPCE entries, and similar optimization opportunities apply. There is one major difference from invokedynamic: Many invokehandle instructions can share a single CPCE entry, if they all have the same signature and method name ("invokeExact" vs. "invoke").

### Adapter method for invokeExact

The standard semantics of an invokevirtual of MethodHandle.invokeExact are simple. The signature for the call site (which may contain any mix of any references and primitive types) is resolved (once, at link time) into a MethodType. Every time the method handle is invoked, the method type is checked against the type of the method handle being invoked. (Since the method handle is a computed value, it can of course be different every time, and the type does not necessarily match.) If the two types differ in any way, aWrongMethodTypeException is thrown. Otherwise, the method handle is invoked on the given types, and returns a value of the type expected by the caller.

An adapter method for invokeExact is correspondingly simple. It merely performs a method type check and then calls invokeBasic. The appendix is a reference to the resolvedMethodType, required to make the type check.

Here is an example:

```
              LambdaForm(a0:L,a1:L,a2:L)=>{
                   t3:V=Invokers.checkExactType(a0:L,a2:L);
                   t4:L=MethodHandle.invokeBasic(a0:L,a1:L);
                   t4:L}
```

The leading argument a0 is a method handle. The trailing argument a2 is the method type appendix, computed when the call site is resolved. The middle argument a1 is the sole argument to the method handle.

First the subroutine Invokers.checkExactType is called on the method handle and the appendix, extracting the type from the method handle and comparing it with the static call site type. If no exception is thrown, control returns to the adapter method. No value is returned, and the name t3 has a pseudo-type of void. (Since the appendix represents the static call site type, and the type of the method handle is the dynamically acceptable type, this may be viewed as a simple dynamic type check.)

Next, invokeBasic is used to jump into the method handle (which is now known to be completely safe for this call). The result comes back, briefly named t4, and is returned to the caller.

### Adapter method for generic invoke

Method handles also support a more complex invocation mode, which can perform type conversions on individual arguments and return values, and even group arguments into varargs arrays. As with invokeExact the resolution of such a call site is carried out by a call to MethodHandleNatives.linkMethod. In this case, the trusted Java code may return a more flexible and complex adapter method.

Here is an example:

```
              LambdaForm(a0:L,a1:L,a2:I,a3:L)=>{
                   t4:L=Invokers.checkGenericType(a0:L,a3:L);
                   t5:I=MethodHandle.invokeBasic(t4:L,a3:L,a0:L,a1:L,a2:I);
                   t5:I}
```

As before, a0 is the method handle and the trailing a3 is a method type. Here, there are two regular arguments, a reference and an int. As before, the first job is to check the type, and this is done by Invokers.checkGenericType. Unlike the simpler check, this routine returns a value. (The routine can also throwWrongMethodTypeException if necessary.) The value returned from checkGenericType is in fact a method handle t4. This method handle is immediately invoked on the original arguments, *plus* the original method handlea0, *plus* the desired call site type a3 (not in that order). Depending on the match or mismatch between the type of a0 and the call site type a3, the actual behavior of t4 may be very simple (basically another invokeBasic) or very complex (an arity change with type conversions. That's up to the runtime.

### Example execution sequence for invokeExact

The receiver of an invokeExact call can be any kind of method handle. In the simplest case it may be a direct method handle connecting the method containing the invoker of the method handle instruction to some other Java language method.

Here is an example of the sequence of events and stack frames that would make such a connection, from a method MHUser.m1 to a target method LibraryCls.m2:

| (MHUser.m1) | (LF adapter for invokeExact) | (LF method for DMH) | (LibraryCls.m2) |
|---|---|---|---|
| (MH) "arg" > invokevirtual invokeExact(L)L | | | |
| (MH) "arg" > push CPC.appendix | | | |
| (MH) "arg" (MT) > jump to CPC.method | | | |
| ... | a0:(MH)a1:"arg" a2:(MT) (MH) (MT) > invokestatic Invokers.checkExactType | | |
| ... | a0:(MH) a1:"arg" a2:(MT) (MH) "arg" > invokestatic MH.invokeBasic(L)L | | |
| ... | ... | a0:(MH)a1:"arg" | |
| | | (MH) > invokestatic DMH.internalMemberName | |
| ... | ... | a0:(MH) a1:"arg" t2:(MN) "arg" (MN) > invokestatic MH.linkToStatic(L+L)L | |
| ... | ... | "arg" (MN) > pop MN | |
| ... | ... | "arg" > jump to MN.method | |
| ... | ... | ... | 10:"arg" > code for LibraryCls.m2 |

As in the case of the invokedynamic example above, there are two internal stack frames, one for the adapter bound to the invokeExact call site, and one which handles invocations for the target method handle.

## Claims

1. A computer-implemented method comprising:
identifying a first instruction to create a variable handle instance, the first instruction including declaration information that identifies a type of a receiver and a variable held by the receiver to which the variable handle instance is configured to provide access, wherein the receiver is a structure used to hold the variable;
responsive to the first instruction, and based on the declaration information, performing one or more checks to determine whether access to the variable is permissible, wherein the one or more checks is performed by at least determining whether an acting class issuing the first instruction has proper privileges to access the variable;
in response to a determination that the acting class has the proper privileges to access the variable, creating the variable handle instance, the variable handle instance comprising one or more constrained functions configured to execute constrained operations on a memory location of the variable, wherein the one or more constrained functions comprise one or more of: one or more fenced operations or one or more atomic operations;
identifying a second instruction that specifies a call to a particular constrained function of the one or more constrained functions of the variable handle instance, wherein the second instruction indicates the receiver; and
identifying, based at least on the receiver indicated by the second instruction, a particular memory location where the variable is stored and causing performance of the particular constrained function with respect to the particular memory location.

2. The method of Claim 1, wherein the receiver is a class and the variable is a static field held by the class, the receiver is a class instance and the variable is a field held by the class instance, the receiver is an array and the variable is an element of the array, or the receiver is a reference to an off-heap or direct memory location representing the variable.

3. The method of any of Claims 1-2, wherein the first instruction calls a lookup function that causes the variable handle instance to store an offset of the variable within the receiver and binds the one or more constrained functions of the variable handle instance to one or more descriptors that identify a type of the receiver and a type of the variable.

4. The method of any of Claims 1-3, wherein the method is performed by a virtual machine (104) managing a first memory area and the instance of the variable is stored in a second memory area that is external to the first memory area managed by the virtual machine (104).

5. The method of any of Claims 1-4, further comprising:
identifying a third instruction that specifies a second call to a second particular constrained function of the one or more constrained functions of the variable handle instance, the third instruction specifying a second receiver that shares the type of the receiver; and
identifying, based at least on the second receiver specified by the third instruction, a second particular memory location where the variable is held by the second receiver and causing performance of the second particular constrained function with respect to the second particular memory location.

6. The method of any of Claims 1-5, wherein the method is performed by a virtual machine (104) and the virtual machine (104) performs the constrained operations by generating machine code instructions supported by hardware upon which the virtual machine (104) is executing.

7. The method of any of Claims 1-6, wherein the constrained operations perform one or more of: relaxed operations, volatile operations, lazy operations, compare-and-set operations, or get-and-set operations.

8. The method of any of Claim 1-7, wherein the second instruction comprises one or more parameters for the particular constrained function and the one or more parameters include one or more of: an array index into the instance of the receiver at which the instance of the variable is located or a value to store to the particular memory location of the instance of the variable.

9. The method of any of Claims 1-8, further comprising: performing a check to ensure that the instance of the receiver specified by the second instruction matches a type of the receiver identified by the declaration information.

10. The method of any of Claims 1-9, wherein causing performance of the particular constrained function with respect to the particular memory location comprises calling a function that interacts with arbitrary memory locations via one or more hardware instructions.

11. The method of any of Claims 1-10, wherein the one or more constrained functions of the variable handle instance include functions corresponding to one or more atomic arithmetic operations.

12. The method of any of Claims 1-11, wherein the variable handle instance is derived from a variable handle sub-class that extends an abstract variable handle class, the abstract variable handle class providing one or more interfaces for the one or more constrained functions and the variable handle sub-class implementing the one or more constrained functions with respect to a particular access type.

13. The method of any of Claims 1-12, further comprising: in response to a determination that the particular constrained function called by the second instruction is signature polymorphic, automatically invoking a predefined function based on a descriptor of a reference representing the call to the particular constrained function, wherein the predefined function performs a type check and invokes the function of the variable handle that performs the particular constrained function.

14. One or more computer-readable media storing instructions that, when executed by one or more computing devices, cause performance of the steps recited in any of Claims 1-13.

15. A computer system comprising a hardware processor (604), a main memory (606), and a storage device (610) storing instructions, wherein the instructions, when read into the main memory (606) from the storage device (610) and executed by the processor (604), cause the processor (604) to perform the steps recited in any of Claims 1-13.

## Patentansprüche

1. Computerimplementiertes Verfahren, umfassend:
Identifizieren einer ersten Anweisung zum Erzeugen einer Variablenhandle-Instanz, wobei die erste Anweisung Deklarationsinformationen aufweist, die einen Typ eines Empfängers und eine von dem Empfänger gehaltene Variable identifizieren, wobei die Variablenhandle-Instanz konfiguriert ist, Zugriff auf die Variable bereitzustellen, wobei der Empfänger eine Struktur ist, die verwendet wird, um die Variable aufzunehmen;
ansprechend auf die erste Anweisung und beruhend auf den Deklarationsinformationen erfolgendes Durchführen einer oder mehrerer Prüfungen, um zu bestimmen, ob Zugriff auf die Variable zulässig ist, wobei die eine oder die mehreren Prüfungen durchgeführt werden, indem zumindest bestimmt wird, ob eine agierende Klasse, die die ersten Anweisung abgibt, geeignete Privilegien zum Zugriff auf die Variable besitzt;
ansprechend auf eine Bestimmung, dass die agierende Klasse die geeigneten Privilegien zum Zugriff auf die Variable besitzt, erfolgendes Erzeugen der Variablenhandle-Instanz, wobei die Variablenhandle-Instanz eine oder mehrere eingeschränkte Funktionen aufweist, die so konfiguriert sind, dass sie eingeschränkte Operationen bezüglich eines Speicherorts der Variablen ausführen, wobei die eine oder die mehreren eingeschränkten Funktionen eine oder mehrere der folgenden Operationen umfassen: eine oder mehrere eingezäunte Operationen oder eine oder mehrere atomare Operationen;
Identifizieren einer zweiten Anweisung, die einen Aufruf einer bestimmten eingeschränkten Funktion der einen oder der mehreren eingeschränkten Funktionen der Variablenhandle-Instanz spezifiziert, wobei die zweite Anweisung den Empfänger angibt; und
Identifizieren, zumindest beruhend auf dem durch die zweite Anweisung angegebenen Empfänger, eines bestimmten Speicherorts, an dem die Variable gespeichert ist, und Bewirken, dass die bestimmte eingeschränkte Funktion bezüglich des bestimmten Speicherorts ausgeführt wird.

2. Verfahren nach Anspruch 1, wobei der Empfänger eine Klasse ist und die Variable ein statisches Feld ist, das von der Klasse gehalten wird, der Empfänger eine Klasseninstanz ist und die Variable ein Feld ist, das von der Klasseninstanz gehalten wird, der Empfänger ein Array ist und die Variable ein Element des Arrays ist, oder der Empfänger eine Referenz auf einen Speicherort außerhalb des Heap oder einen Direktspeicherort, der die Variable repräsentiert, ist.

3. Verfahren nach einem der Ansprüche 1-2, wobei die erste Anweisung eine Nachschlagefunktion aufruft, die bewirkt, dass die Variablenhandle-Instanz einen Versatz der Variablen in dem Empfänger speichert, und die die eine oder die mehreren eingeschränkten Funktionen der Variablenhandle-Instanz an einen oder mehrere Deskriptoren bindet, die einen Typ des Empfängers und einen Typ der Variablen identifizieren.

4. Verfahren nach einem der Ansprüche 1-3, wobei das Verfahren von einer virtuellen Maschine (104) ausgeführt wird, die einen ersten Speicherbereich verwaltet, und die Variableninstanz in einem zweiten Speicherbereich gespeichert wird, der sich außerhalb des von der virtuellen Maschine (104) verwalteten ersten Speicherbereichs befindet.

5. Verfahren nach einem der Ansprüche 1-4, ferner umfassend:
Identifizieren einer dritten Anweisung, die einen zweiten Aufruf einer zweiten bestimmten eingeschränkten Funktion der einen oder der mehreren eingeschränkten Funktionen der Variablenhandle-Instanz spezifiziert, wobei die dritte Anweisung einen zweiten Empfänger spezifiziert, der den gleichen Typ wie der Empfänger aufweist; und
Identifizieren, und zwar zumindest beruhend auf dem durch die dritte Anweisung spezifizierten zweiten Empfänger, eines zweiten bestimmten Speicherorts, an dem die Variable von dem zweiten Empfänger gehalten wird, und Bewirken, dass die zweite bestimmte eingeschränkte Funktion bezüglich des zweiten bestimmten Speicherorts ausgeführt wird.

6. Verfahren nach einem der Ansprüche 1-5, wobei das Verfahren von einer virtuellen Maschine (104) ausgeführt wird und die virtuelle Maschine (104) die eingeschränkten Operationen durch Erzeugen von Maschinencode-Anweisungen ausführt, die von Hardware, auf der die virtuelle Maschine (104) ausgeführt wird, unterstützt werden.

7. Verfahren nach einem der Ansprüche 1-6, wobei die eingeschränkten Operationen eine oder mehrere der folgenden Operationen ausführen: relaxierte Operationen, flüchtige Operationen, faule Operationen, Vergleiche-und-Setze-Operationen oder Erhalte-und-Setze-Operationen.

8. Verfahren nach einem der Ansprüche 1-7, wobei die zweite Anweisung einen oder mehrere Parameter für die bestimmte eingeschränkte Funktion aufweist und der eine oder die mehreren Parameter einen oder mehrere der folgenden Parameter aufweisen: einen Arrayindex in die Empfängerinstanz, bei der sich die Variableninstanz befindet, oder einen Wert, der an dem bestimmten Speicherort der Variableninstanz gespeichert werden soll.

9. Verfahren nach einem der Ansprüche 1-8, ferner umfassend: Ausführen einer Prüfung, um sicherzustellen, dass die durch die zweite Anweisung spezifizierte Empfängerinstanz zu einem Typ des durch die Deklarationsinformationen identifizierten Empfängers passt.

10. Verfahren nach einem der Ansprüche 1-9, wobei das Bewirken, dass die bestimmte eingeschränkte Funktion bezüglich des bestimmten Speicherorts ausgeführt wird, umfasst, dass eine Funktion aufgerufen wird, die mit beliebigen Speicherstellen über eine oder mehrere Hardware-Anweisungen interagiert.

11. Verfahren nach einem der Ansprüche 1-10, wobei die eine oder die mehreren eingeschränkten Funktionen der Variablenhandle-Instanz Funktionen umfassen, die einer oder mehreren atomaren arithmetischen Operationen entsprechen.

12. Verfahren nach einem der Ansprüche 1-11, wobei die Variablenhandle-Instanz von einer Variablenhandle-Unterklasse abgeleitet wird, die eine abstrakte Variablenhandle-Klasse erweitert, wobei die abstrakte Variablenhandle-Klasse eine oder mehrere Schnittstellen für die eine oder die mehreren eingeschränkten Funktionen bereitstellt und die Variablenhandle-Unterklasse die eine oder die mehreren eingeschränkten Funktionen bezüglich eines bestimmten Zugriffstyps implementiert.

13. Verfahren nach einem der Ansprüche 1-12, ferner umfassend: ansprechend auf eine Bestimmung, dass die bestimmte eingeschränkte Funktion, die durch die zweite Anweisung aufgerufen wird, signaturpolymorph ist, erfolgendes automatisches Aufrufen einer vordefinierten Funktion beruhend auf einem Deskriptor einer Referenz, die den Aufruf der bestimmten eingeschränkten Funktion darstellt, wobei die vordefinierte Funktion eine Typprüfung durchführt und die Funktion des Variablenhandle, welche die bestimmte eingeschränkte Funktion ausführt, aufruft.

14. Ein oder mehrere computerlesbare Medien, die Anweisungen speichern, welche, wenn sie von einem oder mehreren Computergeräten ausgeführt werden, bewirken, dass die in einem der Ansprüche 1-13 genannten Schritte ausgeführt werden.

15. Computersystem mit einem Hardware-Prozessor (604), einem Hauptspeicher (606) und einer Speichereinrichtung (610), die Anweisungen speichert, wobei die Anweisungen, wenn sie von der Speichereinrichtung (610) in den Hauptspeicher (606) eingelesen und von dem Prozessor (604) ausgeführt werden, den Prozessor (604) veranlassen, die in einem der Ansprüche 1-13 genannten Schritte auszuführen.

## Revendications

1. Procédé mis en œuvre par ordinateur comprenant :
identifier une première instruction pour créer une instance de traitement de variable, la première instruction comprenant des informations de déclaration qui identifient un type d'un récepteur et une variable maintenue par le récepteur auquel l'instance de traitement de variable est configurée pour fournir un accès, le récepteur étant une structure utilisée pour maintenir la variable ;
en réponse à la première instruction, et sur la base des informations de déclaration, réaliser une ou plusieurs vérifications pour déterminer si un accès à la variable est ou non autorisé, la ou les vérifications étant réalisées par au moins détermination du point de savoir si une classe d'action délivrant la première instruction a ou non des privilèges appropriés pour accéder à la variable ;
en réponse à une détermination du fait que la classe d'action a les privilèges appropriés pour accéder à la variable, créer l'instance de traitement de variable, l'instance de traitement de variable comprenant une ou plusieurs fonctions restreintes configurées pour exécuter des opérations restreintes sur un emplacement de mémoire de la variable, la ou les fonctions restreintes comprenant une ou plusieurs parmi : une ou plusieurs opérations clôturées ou une ou plusieurs opérations atomiques ;
identifier une seconde instruction qui spécifie un appel à une fonction restreinte particulière de la ou des fonctions restreintes de l'instance de traitement de variable, la seconde instruction indiquant le récepteur ; et
identifier, sur la base au moins du récepteur indiqué par la seconde instruction, un emplacement de mémoire particulier où la variable est stockée et provoquer la réalisation de la fonction restreinte particulière par rapport à l'emplacement de mémoire particulier.

2. Procédé selon la revendication 1, dans lequel le récepteur est une classe et la variable est un champ statique maintenu par la classe, le récepteur est une instance de classe et la variable est un champ maintenu par l'instance de classe, le récepteur est un réseau et la variable est un élément du réseau, ou le récepteur est une référence à un emplacement de mémoire hors tas ou direct représentant la variable.

3. Procédé selon l'une quelconque des revendications 1 à 2, dans lequel la première instruction appelle une fonction de recherche qui amène l'instance de traitement de variable à stocker un décalage de la variable dans le récepteur et lie la ou les fonctions restreintes de l'instance de traitement de variable à un ou plusieurs descripteurs qui identifient un type du récepteur et un type de la variable.

4. Procédé selon l'une quelconque des revendications 1 à 3, dans lequel le procédé est réalisé par une machine virtuelle (104) gérant une première zone mémoire et l'instance de la variable est stockée dans une seconde zone mémoire qui est externe à la première zone mémoire gérée par la machine virtuelle (104).

5. Procédé selon l'une quelconque des revendications 1 à 4, comprenant en outre :
identifier une troisième instruction qui spécifie un second appel à une seconde fonction restreinte particulière de la ou des fonctions restreintes de l'instance de traitement de variable, la troisième instruction spécifiant un second récepteur qui partage le type du récepteur ; et
identifier, sur la base au moins du second récepteur spécifié par la troisième instruction, un second emplacement de mémoire particulier où la variable est maintenue par le second récepteur et provoquer la réalisation de la seconde fonction restreinte particulière par rapport au second emplacement de mémoire particulier.

6. Procédé selon l'une quelconque des revendications 1 à 5, dans lequel le procédé est réalisé par une machine virtuelle (104) et la machine virtuelle (104) réalise les opérations restreintes par génération d'instructions de code machine prises en charge par un matériel sur lequel la machine virtuelle (104) s'exécute.

7. Procédé selon l'une quelconque des revendications 1 à 6, dans lequel les opérations restreintes réalisent une ou plusieurs parmi : des opérations relâchées, des opérations volatiles, des opérations paresseuses, des opérations de comparaison et réglage, ou des opérations d'obtention et réglage.

8. Procédé selon l'une quelconque des revendications 1 à 7, dans lequel la seconde instruction comprend un ou plusieurs paramètres pour la fonction restreinte particulière et le ou les paramètres comprennent un ou plusieurs parmi : un indice de réseau dans l'instance du récepteur au niveau duquel l'instance de la variable est située ou une valeur à stocker dans l'emplacement de mémoire particulier de l'instance de la variable.

9. Procédé selon l'une quelconque des revendications 1 à 8, comprenant en outre : réaliser une vérification pour garantir que l'instance du récepteur spécifiée par la seconde instruction correspond à un type du récepteur identifié par les informations de déclaration.

10. Procédé selon l'une quelconque des revendications 1 à 9, dans lequel provoquer la réalisation de la fonction restreinte particulière par rapport à l'emplacement de mémoire particulier comprend l'appel d'une fonction qui interagit avec des emplacements de mémoire arbitraires par l'intermédiaire d'une ou plusieurs instructions de matériel.

11. Procédé selon l'une quelconque des revendications 1 à 10, dans lequel la ou les fonctions restreintes de l'instance de traitement de variable comprennent des fonctions correspondant à une ou plusieurs opérations arithmétiques atomiques.

12. Procédé selon l'une quelconque des revendications 1 à 11, dans lequel l'instance de traitement de variable est dérivée à partir d'une sous-classe de traitement de variable qui étend une classe de traitement de variable abstraite, la classe de traitement de variable abstraite fournissant une ou plusieurs interfaces pour la ou les fonctions restreintes et la sous-classe de traitement de variable mettant en œuvre la ou les fonctions restreintes par rapport à un type d'accès particulier.

13. Procédé selon l'une quelconque des revendications 1 à 12, comprenant en outre : en réponse à une détermination du fait que la fonction restreinte particulière appelée par la seconde instruction est polymorphe à signature, invoquer automatiquement une fonction prédéfinie sur la base d'un descripteur d'une référence représentant l'appel à la fonction restreinte particulière, la fonction prédéfinie réalisant une vérification de type et invoquant la fonction du traitement de variable qui réalise la fonction restreinte particulière.

14. Support(s) lisible(s) par ordinateur stockant des instructions qui, lorsqu'elles sont exécutées par un ou plusieurs dispositifs informatiques, provoquent la réalisation des étapes décrites à l'une quelconque des revendications 1 à 13.

15. Système informatique comprenant un processeur matériel (604), une mémoire principale (606) et un dispositif de stockage (610) stockant des instructions, dans lequel les instructions, lorsqu'elles sont lues dans la mémoire principale (606) à partir du dispositif de stockage (610) et exécutées par le processeur (604), amènent le processeur (604) à réaliser les étapes décrites à l'une quelconque des revendications 1 à 13.
